# EUROPEAN PATENT APPLICATION

(11) **EP 4 123 755 A1**
(43) Date of publication of application: **25.01.2023**
(21) Application number: 21771362.7
(22) Date of filing: 19.03.2021
(51) Int. Cl.: H01M 4/131, H01M 4/505, H01M 4/525, H01M 10/052, H01M 10/0567, H01M 10/0568

(54) **NONAQUEOUS ELECTROLYTIC SOLUTION SECONDARY BATTERY AND NONAQUEOUS ELECTROLYTIC SOLUTION**

(30) Priority: 19.03.2020 JP 2020049533; 19.03.2020 JP 2020049552
(71) Applicant: Mitsubishi Chemical Corporation, Chiyoda-ku Tokyo 100-8251 (JP); MU Ionic Solutions Corporation, Tokyo 100-8251 (JP)
(72) Inventor: NISHIO, Koichi, Tokyo 100-8251 (JP); SAWA, Shuhei, Tokyo 100-8251 (JP)
(74) Representative: Vossius & Partner Patentanwälte Rechtsanwälte mbB
(86) International application number: PCT/JP2021/011554
(87) International publication number: WO 2021/187625

(57) **Abstract**

Provided is a nonaqueous electrolytic solution secondary battery that can achieve the following in combination: suppression of self-discharge, suppression of swelling, reduction of internal resistance, and reduction of capacity loss during continuous charging. A problem is solved by providing a nonaqueous electrolytic solution secondary battery including: a positive electrode containing a positive electrode active material capable of absorbing and releasing a metal ion; a negative electrode containing a negative electrode active material capable of absorbing and releasing a metal ion; and a nonaqueous electrolytic solution, in which a metal composite oxide having a high Ni content is used as the positive electrode active material, and a specific compound was contained in the nonaqueous electrolytic solution.

## Description

### TECHNICAL FIELD

The present invention relates to a nonaqueous electrolytic solution secondary battery and a nonaqueous electrolytic solution.

### Background Art

Lithium nonaqueous electrolytic solution secondary batteries, which use a lithium-containing transition metal oxide as a positive electrode and a nonaqueous solvent as an electrolytic solution, can achieve high energy density and are therefore used in a wide range of applications, from small power sources such as cell phones and laptop computers to large power sources for automobiles, trains, and road leveling. However, demands for higher performance in nonaqueous electrolytic solution secondary batteries have been increasing in recent years, and there are strong demands for improvements in various characteristics.

For example, Patent Document 1 discloses a nonaqueous electrolytic solution containing a specific zwitterion, and discloses that the nonaqueous electrolytic solution can improve high temperature charge storage characteristics of an energy storage device.

For example, Patent Document 2 discloses a nonaqueous electrolytic solution containing a compound with a cation and an anion in the molecule, and discloses that a nonaqueous electrolytic solution secondary battery containing the electrolytic solution can suppress degradation of characteristics due to storage under high temperature and charge/discharge cycle.

Patent document 3 discloses an electrolytic solution containing a specific onium cation as an additive, which improves the discharge maintenance rate at high voltage, suppresses gas generation, and improves overcharge prevention characteristics.

Patent document 4 discloses an additive for nonaqueous electrolytic solutions containing a compound containing SO₂⁻, SO₃⁻, or SO₄⁻ and a heteroatom of N or O, which improves overcharge stability.

Patent Document 5 discloses an electrolytic solution containing a pyridinium propanesulfonate, which can improve the high temperature storage characteristics of a battery and can reduce the internal resistance of the battery.

Patent Document 6 discloses a nonaqueous electrolytic solution secondary battery using a positive electrode with a high nickel content and an electrolytic solution containing monofluorophosphate and/or difluorophosphate, and discloses that the capacity maintenance rate after high temperature storage is high, the amount of stored gas after high temperature storage is low, the resistance after high temperature storage is low, metal elution from a positive electrode is low, and the amount of heat generated at high temperatures is low.

### PRIOR ART DOCUMENTS

### PATENT DOCUMENTS

Patent Document 1 WO 2020/017318
Patent Document 2 Japanese Unexamined Patent Application Publication No. 2012-204100
Patent Document 3 Korean Patent Publication No. 20150024225
Patent Document 4 US Patent Publication No. 2017/0125847
Patent Document 5 China Patent Publication No. 106099183
Patent Document 6 WO 2019/031508

### Summary of Invention

### Technical Problem

In recent years, required characteristics of nonaqueous electrolytic solution secondary batteries, especially those demanded by battery-equipped automobiles, have become increasingly higher, and the durability of batteries is required to be improved to a higher level. However, the above-described techniques have not yet achieved a high level of performance of various types of nonaqueous electrolytic solution secondary batteries. For example, the nonaqueous electrolytic solution secondary batteries of Patent Documents 1 to 5 require further improvement in battery capacity, and the nonaqueous electrolytic solution secondary batteries of Patent Documents 1 to 4 have a problem of large self-discharge. The nonaqueous electrolytic solution secondary batteries of Patent Documents 5 and 6 had problems with self-discharge, swelling, and a large increase in internal resistance. Furthermore, conventional nonaqueous electrolytic solution secondary batteries had a problem of large capacity loss during continuous charging.

A first object of the present invention is to solve the above-described problems in a nonaqueous electrolytic solution secondary battery and to provide a nonaqueous electrolytic solution secondary battery that can achieve the following in combination: suppression of self-discharge, suppression of swelling, reduction of internal resistance, and reduction of capacity loss during continuous charging.

The nonaqueous electrolytic solution secondary batteries described in Patent Documents 1 to 3 have large self-discharge and insufficient capacity maintenance rate at high temperature storage. The nonaqueous electrolytic solution secondary battery described in Patent Document 4 still has insufficient discharge characteristic maintenance performance at low temperatures.

A second object of the present invention is to solve the above-described problems in a nonaqueous electrolytic solution secondary battery and to provide a nonaqueous electrolytic solution that can suppress self-discharge and synergistically improve the capacity maintenance rate at high temperature storage and the discharge characteristic maintenance performance at low temperatures.

### Solution to Problem

In order to solve the above-described first problem, the present inventor intensively studied to find that the above-described problem can be solved by using a nonaqueous electrolytic solution secondary battery with a specific positive electrode and a nonaqueous electrolytic solution containing a specific zwitterionic compound, thereby arriving at the present invention.

In other words, a first aspect of the present invention is the following [A1]-[A6].
[A1] A nonaqueous electrolytic solution secondary battery including: a positive electrode containing a positive electrode active material capable of absorbing and releasing a metal ion; a negative electrode containing a negative electrode active material capable of absorbing and releasing a metal ion; and a nonaqueous electrolytic solution, wherein
   the nonaqueous electrolytic solution contains a compound represented by the following formula (I) and/or (II), and wherein
   the positive electrode active material contains a lithium transition metal compound represented by the following composition formula (IV).

      Li₁₊ₓMO₂ ··· (IV)

      (In the above-described composition formula (IV), x is from - 0.1 to 0.5, M is a plurality of elements including at least Ni, and the Ni/M molar ratio is from 0.40 to 1.0) 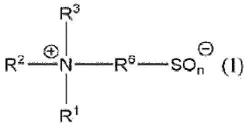 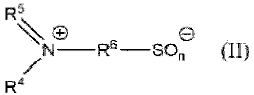 (In formulas (I) and (II), R¹ to R⁵ are organic groups having from 1 to 18 carbon atoms that are independent or bonded to each other, R⁶ is a hydrocarbon group having from 1 to 4 carbon atoms, and n is an integer from 2 to 4)
[A2] The nonaqueous electrolytic solution secondary battery according to [A1], further containing at least one compound selected from the group consisting of a fluorophosphate containing a P=O bond, a salt having an FSO₂ skeleton, an oxalate, and an organic compound containing an S=O bond, and the content of the compounds is from 0.001 to 5% by mass.
[A3] The nonaqueous electrolytic solution secondary battery according to [A1] or [A2], wherein the organic compound containing an S=O bond is a sulfonate ester or a sulfate ester.
[A4] The nonaqueous electrolytic solution secondary battery according to any one of [A1] to [A3], wherein R¹ to R³ in the formula (I) are hydrocarbon groups having from 1 to 15 carbon atoms that are independent or bonded to each other.
[A5] The nonaqueous electrolytic solution secondary battery according to any one of [A1] to [A4], wherein R¹ to R³ in the formula (I) are a methyl group or an ethyl group.
[A6] The nonaqueous electrolytic solution secondary battery according to any one of [A1] to [A5], wherein the positive electrode active material contains 10 µmol/g or more of carbonate.

In order to solve the above-described second problem, the present inventor intensively studied to find that the above-described problem can be solved by containing a specific additive and a specific zwitterionic compound in a nonaqueous electrolytic solution in a mass ratio within a specific range, thereby arriving at the present invention. In other words, a second aspect of the present invention is the following [B1]-[B6] .
[B1] A nonaqueous electrolytic solution containing:
   a compound (X) represented by the formulas (I) and/or (II); and
   at least one compound (Y) selected from the group consisting of a fluorophosphate containing a P=O bond, a salt having an FSO₂ skeleton, an oxalate, and an organic compound containing an S=O bond, wherein the content of the compound(s) (Y) is from 0.001 to 5% by mass, and wherein the content (mass) of the compound (X) contained in the nonaqueous electrolytic solution is equal to or less than the content (mass) of the compound(s) (Y). 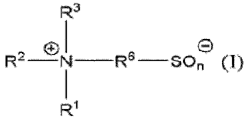 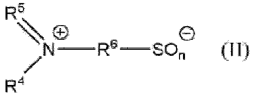 (In formulas (I) and (II), R¹ to R⁵ are organic groups having 1 to 18 carbon atoms that are independent or bonded to each other, R⁶ is a hydrocarbon group having from 1 to 4 carbon atoms, and n is an integer from 2 to 4.)
[B2] The nonaqueous electrolytic solution according to [B2], wherein the fluorophosphate salt containing a P=O bond, the salt having an FSO₂ skeleton, and the oxalate salt are a lithium fluorophosphate salt containing a P=O bond, a FSO₂-based lithium salt, and an oxalate-based lithium salt.
[B3] The nonaqueous electrolytic solution according to [B1] or [B2], wherein the nonaqueous electrolytic solution contains an electrolyte (C) other than the compound (Y), and the content ratio (C) / (X) of the compound (X) to the content of the electrolyte (C) is from 2 to 10,000.
[B4] A nonaqueous electrolytic solution secondary battery including: a positive electrode containing a positive electrode active material capable of absorbing and releasing a metal ion; a negative electrode containing a negative electrode active material capable of absorbing and releasing a metal ion; and the nonaqueous electrolytic solution according to any one of [B1] to [B3].
[B5] The nonaqueous electrolytic solution secondary battery according to [B4], wherein the nonaqueous electrolytic solution secondary battery contains a lithium transition metal compound represented by the following composition formula (IV)

   Li₁₊ₓMO₂ ··· (IV)

   (In the above composition formula (IV), x is from -0.1 to 0.5, M is a plurality of elements including at least Ni, and the Ni/M molar ratio is from 0.40 to 1.0).
[B6] The nonaqueous electrolytic solution secondary battery according to [B4] or [B5], wherein M in the formula (IV) contains Mn.

### EFFECT OF THE INVENTION

According to the first aspect of the present invention, a nonaqueous electrolytic solution secondary battery that can achieve the following in combination: suppression of self-discharge, suppression of swelling, reduction of internal resistance, and reduction of capacity loss during contact charging can be provided.

The present inventor speculates that the nonaqueous electrolytic solution secondary battery having the configuration of the present invention achieves such an excellent effect as follows. Specifically, use of a positive electrode with a large Ni ratio is effective for increasing battery capacity, and while a positive electrode with a large Ni ratio improves battery capacity, a positive electrode with a large Ni ratio has a problem of causing a side reaction with an electrolytic solution more easily than a positive electrode with a large Co ratio, which has been conventionally used, because oxygen atoms in the positive electrode become unstable. Although a known additive such as lithium monofluorophosphate or lithium difluorophosphate has a stabilizing effect on Ni atoms, which are abundant in a positive electrode, a stabilizing effect on oxygen atoms in a positive electrode has been insufficient.

On the other hand, the present invention is characterized in that an electrolytic solution used in a nonaqueous electrolytic solution secondary battery including a positive electrode with a large Ni ratio includes the above-described compound (I) and/or (II). Since an SO₃ anion moiety in the compounds (I) and/or (II) not only acts on and stabilizes a positive electrode Ni atom, but also an intramolecular nitrogen cation acts on and stabilizes a positive electrode oxygen atom, a side reaction between a positive electrode and an electrolytic solution can be suppressed compared to a conventional technique. The present inventor speculates that this can achieve a high level of internal resistance maintenance, swelling suppression, and self-discharge suppression in a nonaqueous electrolytic solution secondary battery, as well as improve continuous charging characteristics of the battery.

According to the second aspect of the present invention, a nonaqueous electrolytic solution that can suppress self-discharge and synergistically improve the capacity maintenance rate at high storage temperatures and the discharge characteristic maintenance performance at low temperatures can be provided. A nonaqueous electrolytic solution secondary battery including the nonaqueous electrolytic solution can be provided.

The present inventor speculates that the reason why a nonaqueous electrolytic solution having the configuration of the second aspect of the present invention achieves such an excellent effect is as follows. Specifically, it is considered that techniques described in Patent Documents 1 to 3 can increase battery characteristics at high temperature storage or during charge/discharge cycles because a side reaction of an electrolytic solution on a positive electrode is suppressed by adding a zwitterionic compound, and on the other hand, a cationic moiety of the zwitterionic compound inhibits formation of a carbonate film on a negative electrode, which accelerates deterioration of the negative electrode and promotes self-discharge of a battery, thereby accelerating deterioration of the capacity characteristics and the discharge characteristics.

On the other hand, when a specific lithium salt additive and a specific zwitterionic compound are contained in an electrolytic solution in a specific amount ratio, a lithium cation contained in a lithium salt additive has a higher adsorption capacity on a negative electrode than a cationic moiety of the zwitterionic compound, and thus acts on the negative electrode in preference to a betaine compound, thereby protecting the negative electrode. The present inventor considers that such an effect is more pronounced when the content of a zwitterionic compound is less than the content of a lithium salt additive, and that protection of both a negative electrode and a positive electrode can suppress self-discharge of nonaqueous electrolytic solution secondary battery and improve capacity maintenance rate at high temperature storage and discharge characteristic maintenance performance at low temperatures to higher levels than before. Description of Embodiments

### < A. First Embodiment >

Hereinafter, embodiments of the present invention will be described in detail. However, the description below is an example (representative example) of embodiments of the present invention, and the present invention is not limited to the contents of these descriptions as far as they do not exceed the gist of the claims.

One embodiment of a first aspect of the present invention relates to a nonaqueous electrolytic solution secondary battery, including a positive electrode containing a positive electrode active material capable of absorbing and releasing a metal ion, a negative electrode containing a negative electrode active material capable of absorbing and releasing a metal ion, and a nonaqueous electrolytic solution. Hereinafter, each configuration will be described.

### [A1. Nonaqueous Electrolytic Solution]

### [A1-1. Compound Represented by Formula (I) and/or (II)]

A nonaqueous electrolytic solution used in the nonaqueous electrolytic solution secondary battery of the embodiment of the present invention contains an electrolyte and a nonaqueous solvent that dissolves the electrolyte, in the same manner as a general nonaqueous electrolytic solution, and especially contains a compound represented by the following formula (I) and/or (II).

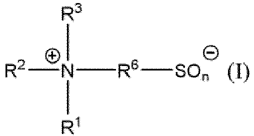

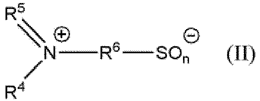

In the above-described formulas (I) and (II), R¹ to R⁵ are organic groups having from 1 to 18 carbon atoms that are independent or bonded to each other. The organic group is a carbon atom-based group, and the carbon atom-based group may have an alkyl group, an alkenyl group, an alkynyl group, an aryl group, or an alkoxy group as a substituent, a hydrogen atom bonded to a carbon atom of the carbon atom-based group may be substituted with a halogen atom, some carbon atoms of the carbon atom-based group may be substituted with an oxygen atom to form an ether bond or an ester bond, and some carbon atoms of the carbon atom-based group may be substituted with a nitrogen atom. R¹ to R⁵ (especially R¹ to R³) are preferably hydrocarbon groups having from 1 to 15 carbon atoms that are independent or bonded to each other, and are more preferably alkyl groups that are independent to each other, and are further preferably a methyl group or an ethyl group from the viewpoint of suppressing increase in internal resistance. R¹ to R³ and R⁴ to R⁵ may each be bonded to each other to form a ring. The number of rings formed may be one or two or more. A compound in which R¹ and R² are methyl groups in the above-described formula (I) is preferable.

R⁶ is a spacer group and is a divalent hydrocarbon group having from 1 to 4 carbon atoms, and preferably a divalent hydrocarbon group having from 1 to 3 carbon atoms.

n is from 2 to 4, preferably 3 or 4, and more preferably 3.

Examples of a compound represented by the above-described formulas (I) and (II) include a compound in which a positive charge exists on a nitrogen atom and a negative charge exists on an oxygen atom bonded to a sulfur atom, such as the following compounds.

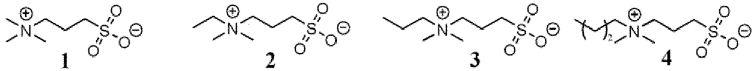

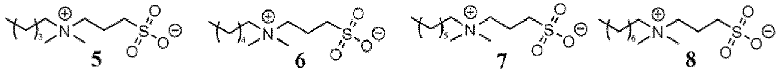

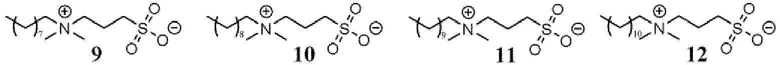

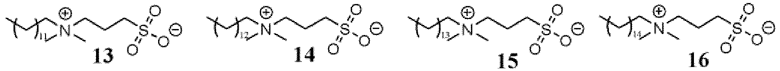

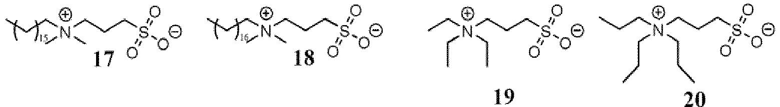

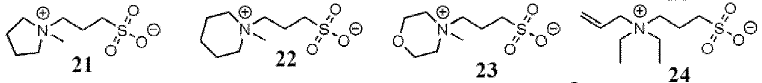

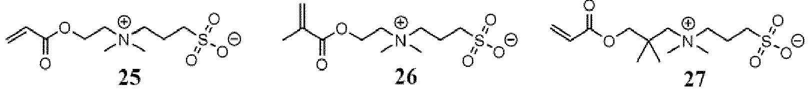

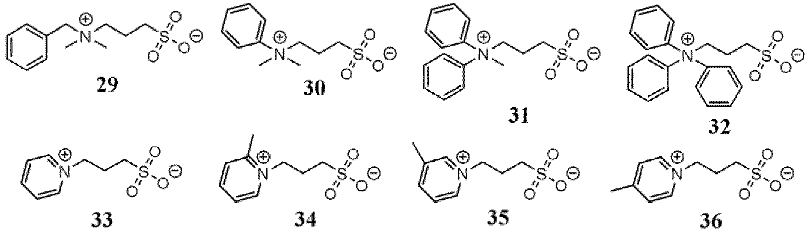

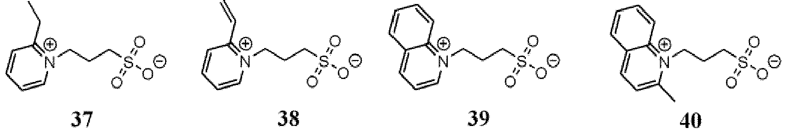

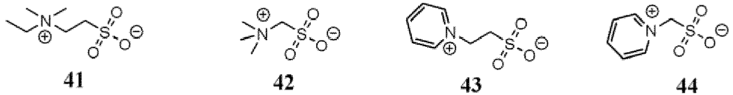

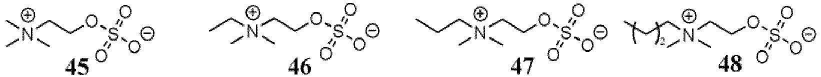

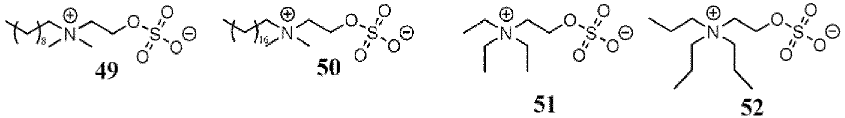

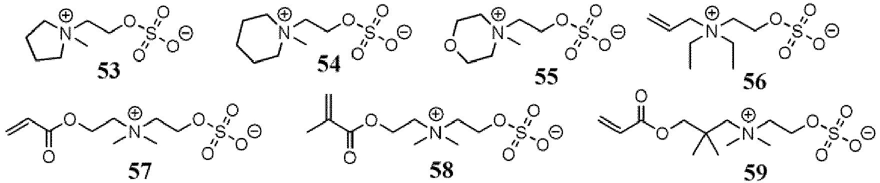

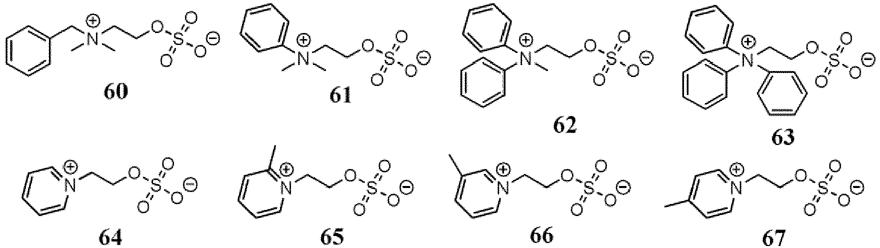

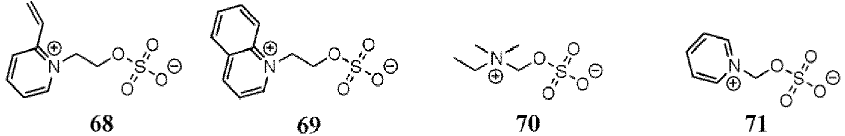

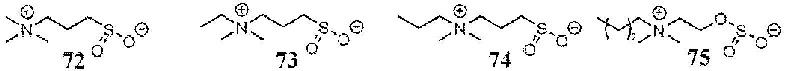

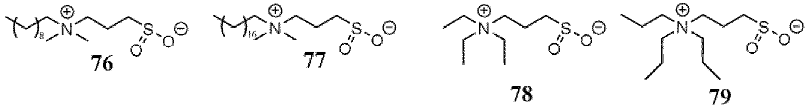

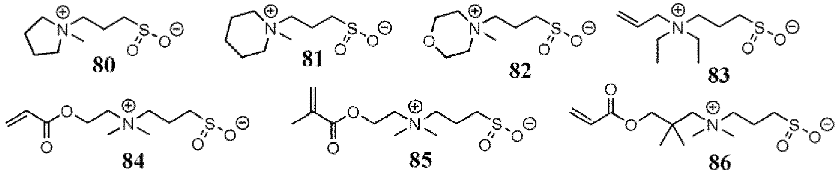

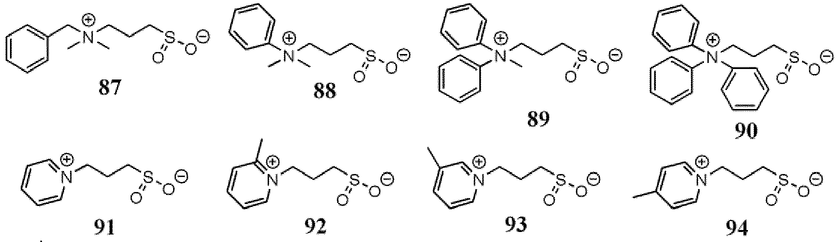

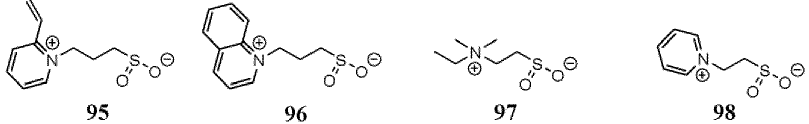

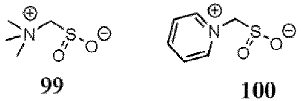

Of these, a compound in which R¹ and R² in the above-described formula (I) are methyl groups is preferable. When R¹ to R³ and R⁴ to R⁵ in formulas (I) and (II) are bonded to each other to form a ring, the formed ring is preferably a 5- or 6-membered nitrogen-containing heterocycle optionally containing a substituent, and more preferably a 6-membered nitrogen-containing heterocycle optionally containing a substituent. One or more additional rings may be condensed to a ring to be formed, and a ring to be formed may further contain an oxygen atom.

Examples of the 5- or 6-membered nitrogen-containing heterocycle include pyrrolidinium, piperidinium, pyridinium, imidazolium, pyrazolium, pyrimidinium, triazinium, and triazolium. Among these, piperidinium and pyridinium are preferred in terms of suppressing side reactions with a negative electrode.

Examples of an optional substituent in the above-described ring include alkyl, alkenyl, and alkynyl groups, which may contain a fluorine atom and/or an oxygen atom. Among these, an alkyl group and an alkenyl group are preferred in terms of adsorption to a positive electrode.

Among compounds represented by the above-described formula (II), particularly preferred are compounds represented by the following formula (III). 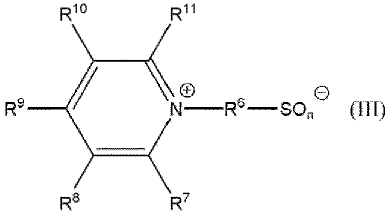
R⁶ in the above-described formula (III) is synonymous with R⁶ in the above-described formula (II).
R⁷ to R¹¹ may be the same or different from each other and are a hydrogen atom, a halogen atom, or a hydrocarbon group.
n is synonymous with n in the above-described formula (II) .

Examples of a halogen atom include a chlorine atom and a fluorine atom. Preferably, the halogen atom is a fluorine atom.

Examples of a hydrocarbon group include an alkyl group, an alkenyl group, and an alkynyl group, which may contain a fluorine atom and/or an oxygen atom. Preferably, the hydrocarbon group is an alkyl group or an alkenyl group.

Specific examples of an alkyl group include a methyl group, an ethyl group, an ***n***-propyl group, an iso-propyl group, an ***n***-butyl group, a ***tert***-butyl group, an ***n***-pentyl group, a hexyl group, a heptyl group, an octyl group, a nonyl group, and a decyl group. Among these, examples of a preferable alkyl group include a methyl group, an ethyl group, an ***n***-propyl group, an ***n***-butyl group, a ***tert***-butyl group, an ***n***-pentyl group, a hexyl group, and an ethyl group, examples of a further preferable alkyl group include a methyl group, an ethyl group, an ***n***-propyl group, an ***n***-butyl group, a ***tert***-butyl group, an ***n-***pentyl group, and an ***n***-pentyl group, and examples of a particularly preferable alkyl group include a methyl group, an ethyl group, an ***n***-butyl group, a ***tert***-butyl group, and a ***tert-***butyl group. The above-described alkyl groups are preferred because the compound represented by formula (III) tends to be localized near the surface of a positive electrode active material.

Examples of an alkenyl group include a vinyl group, an allyl group, a methallyl group, a 2-butenyl group, a 3-methyl 2-butenyl group, a 3-butenyl group, and a 4-pentenyl group. Among these, examples of a preferable alkenyl group include a vinyl group, an allyl group, a methallyl group, and a 2-butenyl group, examples of a further preferable alkenyl group include a vinyl group, an allyl group, a methallyl group, and examples of a particularly preferable alkenyl group include a vinyl group or an allyl group. The above-described alkenyl group is preferred because a compound represented by formula (III) tends to be localized near the surface of a positive electrode active material.

Specific examples of an alkynyl group include an ethynyl group, a 2-propynyl group, a 2-butynyl group, a 3-butynyl group, a 4-pentynyl group, and a 5-hexynyl group. Among them, examples of a preferable alkynyl group include an ethynyl group, a 2-propynyl group, a 2-butynyl group, and a 3-butynyl group, examples of a more preferable alkynyl group include a 2-propynyl group and a 3-butynyl group, and examples of a particularly preferable alkynyl group include a 2-propynyl group. The above-described alkynyl group is preferred because a compound represented by formula (III) tends to be localized near the surface of a positive electrode active material.

Only one or two or more of compounds represented by formulas (I) and (II) may be contained.

The molecular weight of a compound represented by the above-described formulas (I) and (II) is not particularly limited, and is usually 100 or more, and is usually 2,000 or less, preferably 1,000 or less, more preferably 500 or less, and especially preferably 300 or less. When the molecular weight is within the above-described range, the compound is easy to handle and the viscosity of an electrolytic solution containing the compound can be made suitable.

The content of a compound represented by the above-described formulas (I) and (II) in a nonaqueous electrolytic solution is not particularly limited, and is usually 0.001% by mass or more, preferably 0.01% by mass or more, and further preferably 0.1% by mass or more, and the content is usually 8% by mass or less, more preferably 4% by mass or less, further preferably 2% by mass or less, and most preferably 1% by mass or less.

The content of (I) and/or (II) compounds is measured using magnetic resonance spectroscopy or the like.

### [A1-2. Electrolyte]

### < Lithium Salt >

As the electrolyte in the nonaqueous electrolytic solution, a lithium salt is usually used. As the lithium salt, there is no particular restriction as long as the lithium salt is known to be used for this application, and any lithium salt can be used.

Examples thereof include a fluorinated inorganic lithium salt, lithium fluorophosphate, lithium tungstate, lithium carboxylate, lithium sulfonate, lithium imide, lithium methide, lithium oxalate, and a fluorinated organic lithium salt.

Among these, a fluorinated inorganic lithium salt such as LiBF₄, LiSbF₆, or LiTaF₆; a lithium fluorophosphate such as LiPF₆, Li₂PO₃F, or LiPO₂F₂; a lithium sulfonate such as LiFSO₃, CH₃SO₃Li; a lithium imide such as LiN(FSO₂)₂, LiN(FSO₂)(CF₃SO₂), LiN(CF₃SO₂)₂, LiN(C₂F₅SO₂)₂, lithium cyclic 1,2-perfluoroethane disulfonylimide, or lithium cyclic 1,3-perfluoropropane disulfonylimide; a lithium methide salt such as LiC(FSO₂)₃, LiC(CF₃SO₂)₃, or LiC(C₂F₅SO₂)₃; a lithium oxalate salt such as lithium difluorooxalate borate, lithium bis(oxalate)borate, lithium tetrafluorooxalate phosphate, lithium difluorobis(oxalate)phosphate, or lithium tris (oxalate) phosphate; or the like is more preferred from the viewpoint of an effect of improving low temperature output characteristics, high-rate charge/discharge characteristics, impedance characteristics, high temperature storage characteristics, cycle characteristics, or the like. LiPF₆, LiN(FSO₂)₂, lithium bis(oxalate)borate and LiFSO₃ are particularly preferable. The above-described electrolyte salts may be used singly or in combination of two or more kinds thereof.

Examples of a combination of two or more electrolyte salts include, but is not limited to, LiPF₆ and LiFSO₃, LiPF₆ and LiPO₂F₂, and LiPF₆ and lithium bis(oxalate)borate, LiPF₆ and lithium difluorobis(oxalate)phosphate, LiPF₆ and lithium difluorooxalate borate, LiPF₆ and LiN(FSO₂)₂, LiBF₄ and LiPF₆ and LiN(FSO₂)₂. LiPF₆ and LiFSO₃, LiPF₆ and LiPO₂F₂, and LiPF₆ and lithium bis(oxalate)borate are particularly preferable.

The total concentration of these electrolytes in a nonaqueous electrolytic solution is not particularly restricted, and is usually, with respect to the total nonaqueous electrolytic solution, 8% by mass or more, preferably 8.5% by mass or more, more preferably 9% by mass or more, and is usually 18% by mass or less, preferably 17% by mass or less, more preferably 16% by mass or less. When the total concentration of an electrolyte is within the above-described range, the electrical conductivity is appropriate for battery operation, and sufficient output characteristics tend to be obtained.

### [A1-3. Nonaqueous Solvent]

Nonaqueous electrolytic solutions, like ordinary nonaqueous electrolytic solutions, usually contain as their main component a nonaqueous solvent that dissolves the above-described electrolyte. There is no particular restriction on the nonaqueous solvent used here, and any known organic solvent can be used. Examples of organic solvents include, but are not limited to, a saturated cyclic carbonate, a chain carbonate, a chain carboxylic acid ester, a cyclic carboxylic acid ester, an ether-based compound, and a sulfone compound. These can be used singly or in combination of two or more kinds thereof.

Examples of a combination of two or more organic solvents include, but not particularly limited to, a saturated cyclic carbonate and a chain carboxylic acid ester, a cyclic carboxylic acid ester and a chain carbonate, and a saturated cyclic carbonate and a chain carbonate and a chain carboxylic acid ester. Among these, a saturated cyclic carbonate and a chain carbonate, and a saturated cyclic carbonate and a chain carbonate and a chain carboxylic acid ester are particularly preferred.

### [A1-3-1. Saturated Cyclic Carbonate]

Examples of the saturated cyclic carbonate include those containing an alkylene group having from 2 to 4 carbon atoms, and a saturated cyclic carbonate having from 2 to 3 carbon atoms is preferable from the viewpoint of improved battery characteristics derived from improved lithium ion dissociation.

Examples of the saturated cyclic carbonate include ethylene carbonate, propylene carbonate, and butylene carbonate. Ethylene carbonate and propylene carbonate are preferable among these, and ethylene carbonate, which is less susceptible to oxidation and reduction, is more preferred. Saturated cyclic carbonates may be used singly or in combination of two or more kinds thereof in any combination and ratio.

The content of saturated cyclic carbonate is not particularly restricted and is any amount as long as the content does not considerably impair an effect of the present invention in the present embodiment, and the lower limit of the content when one kind is used singly is usually 3% by volume or more, preferably 5% by volume or more, with respect to the total solvent content in a nonaqueous electrolytic solution, and on the other hand, the lower limit of the content is usually 90% by volume or less, preferably 85% by volume or less, and more preferably 80% by volume or less. Such a range tends to avoid decrease in electrical conductivity derived from decrease in dielectric constant of a nonaqueous electrolytic solution, facilitate favorable ranges for high current discharge characteristics of a nonaqueous electrolytic solution secondary battery, stability to a negative electrode, and cycle characteristics, improve oxidation and reduction resistance of a nonaqueous electrolytic solution, and improve stability during high temperature storage.

In this embodiment, "% by volume" means the volume at 25°C and 1 atm.

### [A1-3-2. Chain Carbonate]

A chain carbonate having from 3 to 7 carbon atoms is usually used, and a chain carbonate having from 3 to 5 carbon atoms is preferably used to adjust the viscosity of an electrolytic solution to an appropriate range.

Specific examples of a chain carbonate include dimethyl carbonate, diethyl carbonate, di-n-propyl carbonate, diisopropyl carbonate, n-propylisopropyl carbonate, ethyl methyl carbonate, and methyl-n-propyl carbonate. Dimethyl carbonate, diethyl carbonate, and ethyl methyl carbonate are particularly preferable.

A chain carbonate (hereinafter, abbreviated as "fluorinated chain carbonate" in some cases) containing a fluorine atom can also be suitably used. The number of fluorine atoms in a fluorinated chain carbonate is not particularly restricted as long as the number is 1 or more, and is usually 6 or less, and preferably 4 or less. When a fluorinated chain carbonate contains a plurality of fluorine atoms, the fluorine atoms may be bonded to the same carbon or to different carbons, respectively. Examples of a fluorinated chain carbonate include a fluorinated dimethylcarbonate derivatives such as fluoromethylmethylcarbonate, a fluorinated ethyl methyl carbonate derivative such as 2-fluoroethyl methyl carbonate, and a fluorinated diethyl carbonate derivative such as ethyl-(2-fluoroethyl) carbonate.

Chain carbonate may be used singly, or two or more kinds thereof may be used together in any combination and ratio.

The content of chain carbonate is not particularly limited, and is usually 15% by volume or more, preferably 20% by volume or more, more preferably 25% by volume or more, and is usually 90% by volume or less, preferably 85% by volume or less, more preferably 80% by volume or less, with respect to the total solvent content in a nonaqueous electrolytic solution. By setting the content of chain carbonate in the above-described range, the viscosity of a nonaqueous electrolytic solution can be set in an appropriate range, and it is easy to suppress decrease in ionic conductivity and thus the output characteristics of a nonaqueous electrolytic solution secondary battery in a favorable range.

Furthermore, battery performance can be considerably improved by combining ethylene carbonate with a specific content for a specific chain carbonate.

For example, when dimethyl carbonate and ethyl methyl carbonate are selected as specific chain carbonates, the content of ethylene carbonate is not particularly restricted and is any as long as the content does not considerably impair an effect of the present invention in the present embodiment, and the content of ethylene carbonate is usually 15% by volume or more, preferably 20% by volume or more, and usually 45% by volume or less, preferably 40% by volume or less with respect to the total solvent content of a nonaqueous electrolytic solution, the content of dimethyl carbonate is usually 20% by volume or more, preferably 30% by volume or more, and usually 50% by volume or less, preferably 45% by volume or less with respect to the total solvent content of the nonaqueous electrolytic solution, and the content of ethyl methyl carbonate is usually 20% by volume or more, preferably 30% by volume or more, and usually 50% by volume or less, preferably 45% by volume or less. When the content is within the above-described range, excellent high temperature stability and suppression of gas generation tend to be obtained.

### [A1-3-3. Chain Carboxylic Acid Ester]

Examples of a chain carboxylic acid ester include methyl acetate, ethyl acetate, propyl acetate, butyl acetate, methyl propionate, ethyl propionate, propyl propionate, methyl butyrate, ethyl butyrate, methyl xylate, methyl valerate, methyl isobutyrate, ethyl isobutyrate, and methyl pivalate. Among these, methyl acetate, ethyl acetate, propyl acetate, and butyl acetate are preferable from the viewpoint of improving battery characteristics. A chain carboxylic acid ester (for example, methyl trifluoroacetate or ethyl trifluoroacetate) in which a portion of hydrogen of the above-described compounds is substituted with fluorine can also be suitably used.

### [A1-3-4. Cyclic Carboxylic Acid Ester]

Examples of a cyclic carboxylic acid ester include *γ-*butyrolactone and *γ*-valerolactone. Of these, *γ*-butyrolactone is more preferable. A cyclic carboxylic acid ester in which a portion of hydrogen of the above-described compound is substituted with fluorine can also be suitably used.

### [A1-3-5. Ether-based Compound]

As the ether-based compound, a chain ether having from 3 to 10 carbon atoms such as dimethoxymethane, diethoxymethane, ethoxymethoxymethane, ethylene glycol di-n-propyl ether, ethylene glycol di-n-butyl ether, or diethylene glycol dimethyl ether and a cyclic ether having from 3 to 6 carbon atoms such as tetrahydrofuran, 2-methyltetrahydrofuran, 3-methyltetrahydrofuran, 1,3-dioxane, 2-methyl-1,3-dioxane, 4-methyl-1,3-dioxane, or 1,4-dioxane are preferable.

Among them, dimethoxymethane, diethoxymethane, or ethoxymethoxymethane is preferred as a chain ether having from 3 to 10 carbon atoms because of high solvation capacity for lithium ions, improved ion dissociation, low viscosity, and high ionic conductivity, and tetrahydrofuran, 1,3-dioxane, 1,4-dioxane or the like is preferred as a cyclic ether having from 3 to 6 carbon atoms because of high ionic conductivity.

The content of an ether-based compound is not particularly restricted, and is any amount as long as an effect of the present invention of the present embodiment is not considerably impaired, and is, in 100% by volume of a nonaqueous solvent, usually 1% by volume or more, preferably 2% by volume or more, more preferably 3% by volume or more, and is usually 30% by volume or less, preferably 25% by volume or less, and more preferably 20% by volume or less. When the content of an ether-based compound is within the above-described preferable range, an effect of improving lithium ion dissociation of ether and ionic conductivity derived from viscosity decrease can be easily secured. When a negative electrode active material is a carbonaceous material, a phenomenon of co-insertion of a chain ether together with a lithium ion can be suppressed, and thus input/output characteristics or charge/discharge rate characteristics can be set within an appropriate range.

### [A1-3-6. Sulfone Compound]

A sulfone compound is not particularly restricted whether the sulfone compound is a cyclic sulfone or a chain sulfone, and in the case of a cyclic sulfone, the number of carbon atoms is usually from 3 to 6, and preferably from 3 to 5, and in the case of a chain sulfone, the number of carbon atoms is usually from 2 to 6, and preferably from 2 to 5. The number of sulfonyl groups in one molecule of a sulfone compound is not restricted, and is usually 1 or 2.

Examples of the cyclic sulfone include a monosulfone compound such as trimethylene sulfone, tetramethylene sulfone, or hexamethylene sulfone; and a disulfone compound such as trimethylene disulfone, tetramethylene disulfone, or hexamethylene disulfone. Among them, from the viewpoint of dielectric constant and viscosity, a tetramethylene sulfone, a tetramethylene disulfone, a hexamethylene sulfone, and a hexamethylene disulfone are more preferable, and a tetramethylene sulfone (sulfolanes) is especially preferable.

As the sulfolane, a sulfolane and/or a sulfolane derivative (hereinafter, may be abbreviated as "sulfolane" including a sulfolane) is preferable. As the sulfolane derivative, one in which one or more of hydrogen atoms bonded on the carbon atoms constituting a sulfolane ring is substituted with a fluorine atom or an alkyl group is preferable.

Among them, 2-methylsulforane, 3-methylsulforane, 2-fluorosulforane, 3-fluorosulforane, 2,3-difluorosulforane, 2-trifluoromethylsulforane, and 3-trifluoromethylsulforane are preferable from the viewpoint of high ionic conductivity and high input/output power.

Examples of a chain sulfone include dimethyl sulfone, ethyl methyl sulfone, diethyl sulfone, monofluoromethyl methyl sulfone, difluoromethyl methyl sulfone, trifluoromethyl methyl sulfone, and pentafluoroethyl methyl sulfone. Among these, dimethyl sulfone, ethyl methyl sulfone, and monofluoromethyl methyl sulfone are preferred from the viewpoint that storage stability of an electrolytic solution at high temperatures is improved.

The content of a sulfone compound is not particularly restricted and is any amount as long as the content does not considerably impair an effect of the present invention, and the content, with respect to the total solvent content of the nonaqueous electrolytic solution, is usually 0.3% by volume or more, preferably 0.5% by volume or more, more preferably 1% by volume or more, and is also usually 40% by volume or less, more preferably 35% by volume or less, more preferably 30% by volume or less. When the content of a sulfone compound is within the above-described range, an electrolytic solution with excellent high temperature storage stability tends to be obtained.

### [A1-4. Additive]

A nonaqueous electrolytic solution may contain a variety of additives to the extent that an effect of the present invention is not considerably impaired. As the additive, any conventionally known additive may be used. The additives may be used singly, or two or more kinds thereof may be used together in any combination and ratio.

Examples of a conventionally known additive (hereinafter, also referred to as a combination additive) that can be contained in a nonaqueous electrolytic solution include a cyclic carbonate containing a carbon-carbon unsaturated bond, a fluorine-containing cyclic carbonate, a compound containing an isocyanate group, a compound having an isocyanurate skeleton, an organic compound containing an S=O bond, a phosphorus-containing organic compound, an organic compound containing a cyano group, a silicon-containing compound, an aromatic compound, a fluorine-free carboxylic ester, a cyclic compound containing a plurality of ether bonds, a compound having an isocyanurate skeleton, a fluorophosphate containing a P=O bond, a borate, an oxalate, a salt having an FSO₂ skeleton. Examples thereof include compounds described in WO 2015/111676.

Among them, at least one or more compounds selected from the group consisting of an organic compound containing an S=O bond, a fluorophosphate containing a P=O bond, an oxalate, and a salt having an FSO₂ skeleton are preferably contained.

From the viewpoint of suppressing the continuous charge capacity loss rate, it is more preferable to contain at least one or more compounds selected from the group consisting of an organic compound containing an S=O bond, an oxalate salt, and a salt having an FSO₂ skeleton, it is further preferable to contain a salt having an FSO₂ skeleton, it is especially preferable to contain a fluorosulfonate, and it is most preferable to contain lithium fluorosulfonate.

It is more preferable to contain at least one or more compounds selected from the group consisting of an organic compound containing an S=O bond, a fluorophosphate containing a P=O bond, and a salt having an FSO₂ skeleton from the viewpoint of suppressing internal resistance increase and swelling,
it is more preferable to contain at least one or more compounds selected from the group consisting of a sulfate or a sulfonate ester, a difluorophosphate, and a fluorosulfonate,
it is more preferable to contain two or more compounds selected from the group consisting of a sulfate or a sulfonate ester, a difluorophosphate, and a fluorosulfonate,
a difluorophosphate and a sulfate or a sulfonate, or a difluorophosphate and a fluorosulfonate are more preferable, and
lithium difluorophosphate and 1,2-ethylene sulfate or methylene methane disulfonate, or lithium difluorophosphate and lithium fluorosulfonate are most preferable.

Additives may be used singly or in combination of two or more kinds thereof in any combination and ratio. The content of an additive (total amount in the case of two or more additives), in 100% by mass of a nonaqueous electrolytic solution, can be 0.001% by mass or more, preferably 0.01% by mass or more, and more preferably 0.1% by mass or more, and can be 10% by mass or less, preferably 5% by mass or less, and more preferably 3% by mass or less. When the content of an additive is within this range, the characteristics of a nonaqueous electrolytic solution secondary battery, especially the durability or storage characteristics, can be considerably improved. Although the principle behind this is not known, it is believed that this is because mixing additives at this ratio minimizes side reactions of an additive on an electrode.

With respect to the mass ratio of a compound represented by formula (I) and/or (II) above to an additive (in the case of two or more kinds, the total amount), the compound represented by formula (I) and/or (II) to the additive is usually 1/100 or more, preferably 10/100 or more, more preferably 20/100 or more, further preferably 25/100 or more, and usually 10,000/100, preferably 500/100 or less, more preferably 100/100 or less, particularly preferably 80/100 or less, and most preferably 40/100 or less. When the mass ratio is in this range, nonaqueous electrolytic solution secondary battery characteristics, especially durability characteristics or storage characteristics, can be considerably improved. Although the principle behind this is not known, it is believed that this is because mixing additives at this ratio minimizes side reactions of an additive on an electrode.

When LiPF₆ is contained in a nonaqueous electrolytic solution, the mass ratio of an additive (in the case of two or more kinds, the total amount) to the content of LiPF₆ is usually 0.00005 or more, preferably 0.001 or more, more preferably 0.01 or more, further preferably 0.02 or more, particularly preferably 0.025 or more, usually 1.0 or less, preferably 0.5 or less, more preferably 0.4 or less, and further preferably 0.35 or less. When the mass ratio is in this range, nonaqueous electrolytic solution secondary battery characteristics, especially durability characteristics or continuous charging characteristics, can be considerably improved. Although the principle behind this is not known, it is believed that mixing LiPF₆ at this ratio minimizes decomposition side reaction of LiPF₆ in a nonaqueous electrolytic solution secondary battery.

### [A1-4-1. Organic Compound Containing S=O Bond]

An organic compound containing an S=O bond is not particularly restricted as long as the organic compound is an organic compound that contains at least one S=O bond in the molecule. An organic compound containing an S=O bond is preferred, and at least one compound selected from the group consisting of sulfonate (chain sulfonate or cyclic sulfonate), sulfate (chain sulfate or cyclic sulfate), or sulfite (chain sulfite or cyclic sulfite) is more preferred. Specific examples are shown below. However, those falling under salts having an FSO₂ skeleton are not "organic compounds containing an S=O bond" but are included in "salts having an FSO₂ skeleton" as described below, and compounds represented by the above-described formula (I) are not included.

A chain sulfonate such as an alkyl disulfonate such as methyl fluorosulfonate, methyl methanesulfonate, ethyl methanesulfonate, busulfan, methyl methanesulfonyloxyacetate, methyl vinyl sulfonate, allyl vinyl sulfonate, propargylic allylsulfonate, methoxycarbonyl methyl methane disulfonate, ethoxycarbonylmethyl methane disulfonate, 1,3-butanedisulfonate methoxycarbonylmethyl methane, 1,3-butanedisulfonate ethoxycarbonylmethyl methane, 1,3-butanedisulfonate 1-methoxycarbonylethyl methane, or 1,3-butanedisulfonate 1-ethoxycarbonylethyl ethane;
a cyclic sulfonate ester such as 1,3-propanesultone, 1-fluoro-1,3-propanesultone, 1-methyl-1,3-propanesultone, 1-propene-1,3-sultone, 2-propene-1,3-sultone, 1-fluoro-1-propene-1,3-sultone, 1-methyl-1-propene-1,3-sultone, 1,4-butane-sultone, 1,5-pentane-sultone, methylene methane disulfonate, or ethylene methane disulfonate;
a chain sulfate such as dimethyl sulfate, ethyl methyl sulfate, or diethyl sulfate;
a cyclic sulfate such as 1,2-ethylene sulfate, 1,2-propylene sulfate, 1,3-propylene sulfate, or 1,2-butylene sulfate;
a chain sulfite ester such as dimethyl sulfite, ethyl methyl sulfite, or diethyl sulfite;
a cyclic sulfite ester such as 1,2-ethylene sulfite, 1,2-propylene sulfite, 1,3-propylene sulfite, or 1,2-butylene sulfite:
   In particular, from the viewpoint of further enhancing an effect of improving charge/discharge rate characteristics and impedance characteristics, in addition to a gas suppression effect during high temperature storage, sulfonic acid (chain sulfonate or cyclic sulfonate) or a sulfate (a chain sulfate or a cyclic sulfate) is preferred, a chain sulfonate, a cyclic sulfonate, or a cyclic sulfate is more preferred, and 1,3-propanesultone, methylene methane disulfonate, and 1,2-ethylene sulfate are further preferred.

Organic compounds containing an S=O bond may be used singly or in combination with two or more kinds thereof in any combination and ratio. The content of organic compound containing an S=O bond (in case of two or more kinds, the total amount), in 100% by mass of nonaqueous electrolytic solution, can be 0.001% by mass or more, preferably 0.01% by mass or more, more preferably 0.1 % by mass or more, and can be 10% by mass or less, preferably 5 by mass or less, and more preferably 3% by mass or less. When the content of an organic compound containing an S=O bond is in this range, nonaqueous electrolytic solution secondary battery characteristics, especially durability characteristics or continuous charging characteristics, can be considerably improved. Although the principle behind this is not known, it is believed that this is because mixing additives at this ratio minimizes side reactions of an additive on an electrode.

With respect to the mass ratio of a compound represented by formula (I) above to an organic compound containing an S=O bond (in the case of two or more kinds, the total amount), the compound represented by formula (I) to the organic compound containing an S=O bond is usually 1/100 or more, preferably 10/100 or more, more preferably 20/100 or more, further preferably 25/100 or more, and usually 10,000/100, preferably 500/100 or less, more preferably 100/100, particularly preferably 80/100 or less, and most preferably 40/100 or less. When the mass ratio is in this range, nonaqueous electrolytic solution secondary battery characteristics, especially durability characteristics or continuous charging characteristics, can be considerably improved. Although the principle behind this is not known, it is believed that this is because mixing additives at this ratio minimizes side reactions of an additive on an electrode.

When LiPF₆ is contained in a nonaqueous electrolytic solution, the mass ratio (organic compound containing S=O bond/LiPF₆) of an organic compound containing an S=O bond (in the case of two or more kinds, the total amount) to the content of LiPF₆ is usually 0.00005 or more, preferably 0.001 or more, more preferably 0.01 or more, further preferably 0.02 or more, particularly preferably 0.025 or more, usually 1.0 or less, preferably 0.5 or less, more preferably 0.4 or less, and further preferably 0.35 or less. When the mass ratio is in this range, nonaqueous electrolytic solution secondary battery characteristics, especially durability characteristics or continuous charging characteristics, can be considerably improved. Although the principle behind this is not known, it is believed that mixing LiPF₆ at this ratio minimizes decomposition side reaction of LiPF₆ in a nonaqueous electrolytic solution secondary battery.

The content of an organic compound containing an S=O bond is determined by nuclear magnetic resonance (NMR) analysis. NMR analysis is usually performed, and when solvent peaks make it difficult to attribute other compounds, gas chromatography (GC) or ion chromatography (IC) analysis is also performed.

### [A1-4-2. Fluorophosphate Containing P=O Bond]

Fluorophosphate used in the present embodiment is not particularly restricted as long as the phosphate contains a P=O bond and a P-F bond in the molecule.

Examples of a countercation for a phosphate containing a P-F bond include an alkali metal such as lithium, sodium, or potassium, and among these, lithium is preferable.

Examples of a fluorophosphate containing a P=O bond include monofluorophosphate such as Li₂PO₃F; and difluorophosphate such as LiPO₂F₂, NaPO₂F₂, KPO₂F₂.

In particular, from the viewpoint of further enhancing an effect of improving charge/discharge rate characteristics and impedance characteristics, in addition to gas suppression effect during high temperature storage, lithium difluorophosphate is preferable, and lithium difluorophosphate is more preferable.

Fluorophosphate containing a P=O bond may be used singly or in combination with two or more kinds thereof in any combination and ratio. The content of a fluorophosphate containing a P=O bond (in case of two or more kinds, the total amount), in 100 mass% of the nonaqueous electrolytic solution, can be 0.001% by mass or more, preferably 0.01% by mass or more, more preferably 0.1% by mass or more, and can be 10% by mass or less, and is preferably 5% by mass or less, and more preferably 3% by mass or less. When the content of a fluorophosphate containing a P=O bond is in this range, nonaqueous electrolytic solution secondary battery characteristics, especially durability characteristics or continuous charging characteristics, can be considerably improved. Although the principle behind this is not known, it is believed that this is because mixing additives at this ratio minimizes side reactions of an additive on an electrode.

With respect to the mass ratio of a compound represented by formula (I) above to a fluorophosphate containing a P=O bond (in the case of two or more kinds, the total amount), the compound represented by formula (I) to the fluorophosphate containing a P=O bond is usually 1/100 or more, preferably 10/100 or more, more preferably 20/100 or more, further preferably 25/100 or more, and usually 10,000/100, preferably 500/100 or less, more preferably 100/100, particularly preferably 80/100 or less, and most preferably 40/100 or less. When the mass ratio is in this range, nonaqueous electrolytic solution secondary battery characteristics, especially durability characteristics or continuous charging characteristics, can be considerably improved. Although the principle behind this is not known, it is believed that this is because mixing additives at this ratio minimizes side reactions of an additive on an electrode.

When LiPF₆ is contained in a nonaqueous electrolytic solution, the mass ratio (fluorophosphate/LiPF₆) of a fluorophosphate containing a P=O bond (in the case of two or more kinds, the total amount) to the content of LiPF₆ is usually 0.00005 or more, preferably 0.001 or more, more preferably 0.01 or more, further preferably 0.02 or more, particularly preferably 0.025 or more, usually 1.0 or less, preferably 0.5 or less, more preferably 0.4 or less, and further preferably 0.35 or less. When the mass ratio is in this range, nonaqueous electrolytic solution secondary battery characteristics, especially durability characteristics or continuous charging characteristics, can be considerably improved. Although the principle behind this is not known, it is believed that mixing LiPF₆ at this ratio minimizes decomposition side reaction of LiPF₆ in a nonaqueous electrolytic solution secondary battery.

The content of a fluorophosphate containing a P=O bond is determined by nuclear magnetic resonance (NMR) analysis. NMR analysis is usually performed, and when solvent peaks make it difficult to attribute other compounds, ion chromatography (IC) analysis is also performed.

### [A1-4-3. Salt Having FSO₂ Skeleton]

The salt having an FSO₂ skeleton used in the present embodiment is not particularly restricted as long as the salt has an FSO₂ skeleton in the molecule.

Examples of a countercation for a salt having an FSO₂ skeleton include an alkali metal such as lithium, sodium, or potassium, and among these, lithium is preferable.

Examples thereof include a fluorosulfonate such as FSO₃Li, FSO₃Na, FSO₃K, FSO₃(CH₃)₄N, FSO₃(C₂H₅)₄N, or FSO₃(n-C₄H₉)₄N;
a fluorosulfonylimide salt such as LiN(FSO₂)₂, or LiN(FSO₂)(CF₃SO₂); and
a fluorosulfonyl methide salt such as LiC(FSO₂)₃.

In particular, from the viewpoint of further improving an effect of charge/discharge rate characteristics and impedance characteristics, in addition to gas suppression effect during high temperature storage, a fluorosulfonate is preferable, and lithium fluorosulfonate is more preferable.

A salt having an FSO₂ skeleton may be used singly or in combination with two or more kinds thereof in any combination and ratio. The content of a salt having an FSO₂ skeleton (in case of two or more kinds, the total amount), in 100 mass% of the nonaqueous electrolytic solution, can be 0.001% by mass or more, preferably 0.01% by mass or more, more preferably 0.1% by mass or more, and can be 10% by mass or less, and is preferably 5% by mass or less, and more preferably 3% by mass or less. When the content of a salt having an FSO₂ skeleton is in this range, nonaqueous electrolytic solution secondary battery characteristics, especially durability characteristics or continuous charging characteristics, can be considerably improved. Although the principle behind this is not known, it is believed that this is because mixing additives at this ratio minimizes side reactions of an additive on an electrode.

With respect to the mass ratio of a compound represented by formula (I) above to a salt having an FSO₂ skeleton (in the case of two or more kinds, the total amount), the compound represented by formula (I) to the salt having an FSO₂ skeleton is usually 1/100 or more, preferably 10/100 or more, more preferably 20/100 or more, further preferably 25/100 or more, and usually 10,000/100, preferably 500/100 or less, more preferably 100/100, particularly preferably 80/100 or less, and most preferably 40/100 or less. When the mass ratio is in this range, nonaqueous electrolytic solution secondary battery characteristics, especially durability characteristics or continuous charging characteristics, can be considerably improved. Although the principle behind this is not known, it is believed that this is because mixing additives at this ratio minimizes side reactions of an additive on an electrode.

When LiPF₆ is contained in a nonaqueous electrolytic solution, the mass ratio (salt having an FSO₂ skeleton /LiPF₆) of a salt having an FSO₂ skeleton (in the case of two or more kinds, the total amount) to the content of LiPF₆ is usually 0.00005 or more, preferably 0.001 or more, more preferably 0.01 or more, further preferably 0.02 or more, particularly preferably 0.025 or more, usually 1.0 or less, preferably 0.5 or less, more preferably 0.4 or less, and further preferably 0.35 or less. When the mass ratio is in this range, nonaqueous electrolytic solution secondary battery characteristics, especially durability characteristics or continuous charging characteristics, can be considerably improved. Although the principle behind this is not known, it is believed that mixing LiPF₆ at this ratio minimizes decomposition side reaction of LiPF₆ in a nonaqueous electrolytic solution secondary battery.

The content of a salt having an FSO₂ skeleton is determined by nuclear magnetic resonance (NMR) analysis. NMR analysis is usually performed, and when solvent peaks make it difficult to attribute other compounds, ion chromatography (IC) analysis is also performed.

### [A1-4-4. Oxalate]

An oxalate is not particularly restricted as long as the oxalate is a compound having at least one oxalic acid skeleton in the molecule.

Examples of a countercation for an oxalate include an alkali metal such as lithium, sodium, or potassium, and among these, lithium is preferable.

Examples thereof include an oxalate borate salt such as lithium bis(oxalate)borate or lithium difluorooxalate borate; and
an oxalate phosphate salt such as lithium tetrafluorooxalate phosphate, lithium difluorobis(oxalate)phosphate, or lithium tris(oxalate)phosphate.

In particular, from the viewpoint of further improving an effect of charge/discharge rate characteristics and impedance characteristics, in addition to gas suppression effect during high temperature storage, an oxalate borate salt is preferable, and lithium bis(oxalate)borate is more preferable.

An oxalate may be used singly or in combination with two or more kinds thereof in any combination and ratio. The content of an oxalate (in case of two or more kinds, the total amount), in 100 mass% of the nonaqueous electrolytic solution, can be 0.001% by mass or more, preferably 0.01% by mass or more, more preferably 0.1% by mass or more, and can be 10% by mass or less, and is preferably 5% by mass or less, and more preferably 3% by mass or less. When the content of an oxalate is in this range, nonaqueous electrolytic solution secondary battery characteristics, especially durability characteristics or continuous charging characteristics, can be considerably improved. Although the principle behind this is not known, it is believed that this is because mixing additives at this ratio minimizes side reactions of an additive on an electrode.

With respect to the mass ratio of a compound represented by formula (I) above to an oxalate (in the case of two or more kinds, the total amount), the compound represented by formula (I) to the oxalate is usually 1/100 or more, preferably 10/100 or more, more preferably 20/100 or more, further preferably 25/100 or more, and usually 10,000/100, preferably 500/100 or less, more preferably 100/100, particularly preferably 80/100 or less, and most preferably 40/100 or less. When the mass ratio is in this range, nonaqueous electrolytic solution secondary battery characteristics, especially durability characteristics or continuous charging characteristics, can be considerably improved. Although the principle behind this is not known, it is believed that this is because mixing additives at this ratio minimizes side reactions of an additive on an electrode.

When LiPF₆ is contained in a nonaqueous electrolytic solution, the mass ratio (oxalate /LiPF₆) of an oxalate (in the case of two or more kinds, the total amount) to the content of LiPF₆ is usually 0.00005 or more, preferably 0.001 or more, more preferably 0.01 or more, further preferably 0.02 or more, particularly preferably 0.025 or more, usually 1.0 or less, preferably 0.5 or less, more preferably 0.4 or less, and further preferably 0.35 or less. When the mass ratio is in this range, nonaqueous electrolytic solution secondary battery characteristics, especially durability characteristics or continuous charging characteristics, can be considerably improved. Although the principle behind this is not known, it is believed that mixing LiPF₆ at this ratio minimizes decomposition side reaction of LiPF₆ in a nonaqueous electrolytic solution secondary battery.

The content of an oxalate is determined by nuclear magnetic resonance (NMR) analysis. NMR analysis is usually performed, and when solvent peaks make it difficult to attribute other compounds, ion chromatography (IC) analysis is also performed.

Some additives are listed as salts as electrolytes, in which case discrimination is based on the concentration range. For example, when a fluorinated inorganic salt is contained at 10% by mass in a nonaqueous electrolytic solution, the salt is considered to be an electrolyte, and when a salt having an oxalic acid skeleton is contained at 0.5% by mass, the salt is considered to be an additive.

### [A2. Nonaqueous Electrolytic Solution Secondary Battery]

The nonaqueous electrolytic solution secondary battery of the present invention is a nonaqueous electrolytic solution secondary battery including a positive electrode containing a positive electrode active material capable of absorbing and releasing a metal ion, and a negative electrode containing a negative electrode active material capable of absorbing and releasing a metal ion, containing a nonaqueous electrolytic solution.

### [A2-1. Nonaqueous Electrolytic Solution]

The above-described nonaqueous electrolytic solution is used as the above-described nonaqueous electrolytic solution. Although only the above-described nonaqueous electrolytic solution may be used as a nonaqueous electrolytic solution, another nonaqueous electrolytic solution may be used in mixture with the above-described nonaqueous electrolytic solution within a range that does not depart from the spirit of the present invention.

### [A2-2. Negative Electrode]

A negative electrode is one that has a negative electrode active material on at least a portion of the surface of a current collector.

### [A2-2-1. Negative Electrode Active Material]

The negative electrode active material to be used for a negative electrode is not particularly restricted as long as the material is capable of electrochemically absorbing and releasing a metal ion. Specific examples thereof include a carbonaceous material, a metal particle alloyable with Li, a lithium-containing metal composite oxide material, and a mixture thereof. Among these, from the viewpoint of favorable cycle characteristics and safety, as well as excellent continuous charging characteristics, it is preferable to use a carbonaceous material, a metal particle alloyable with Li, and a mixture of a metal particle alloyable with Li and a graphite particle. These may be used singly, or may be used together in any combination of two or more kinds thereof.

### [A2-2-2. Carbon-based Material]

Examples of a carbon-based material include natural graphite, artificial graphite, amorphous carbon, carbon-coated graphite, graphite-coated graphite, and resin-coated graphite. Among these, natural graphite is preferable. Carbonaceous materials may be used singly, or two or more kinds thereof may be used together in any combination and in any ratio.

Examples of natural graphite include scaly graphite, scale graphite, and/or graphite particles made from these graphites by spheroidizing, densifying, or other treatments. Among these, spherical or ellipsoidal graphite particles that have undergone spheronization treatment are particularly preferable from the viewpoint of particle filling or charge/discharge rate characteristics.

The average particle size (d50) of graphite particles is usually from 1 um to 100 µm.

### [A2-2-3. Physical Properties of Carbon-based Material]

The carbon-based material as a negative electrode active material preferably satisfies at least one item among the physical properties, shape, and other characteristics described in (1) to (5) below, and particularly preferably satisfies a plurality of items at the same time.
(1) X-ray Parameter
   The d value (interlayer distance) of the lattice plane (002 plane) determined by X-ray diffraction by GAKUSHIN method for a carbonaceous material is usually from 0.335 nm to 0.360 nm. The crystallite size (Lc) of a carbonaceous material determined by X-ray diffraction by GAKUSHIN method is 1.0 nm or more.
(2) Volume-based Average Particle Size
   The volume-based average particle size of a carbonaceous material is the average particle size (median diameter) on a volume basis determined by laser diffraction and scattering, and is usually from 1 um to 100 µm.
(3) Raman R Value, Raman Half-value Width
   The Raman R value of a carbonaceous material is a value measured using the argon ion laser Raman spectroscopy method, and is usually from 0.01 to 1.5.
   The Raman half-value width around 1,580 cm-1 for a carbonaceous material is not particularly restricted, and is usually from 10 cm⁻¹ to 100 cm⁻¹.
(4) BET Specific Surface Area
   The BET specific surface area of a carbonaceous material is a value of specific surface area measured using the BET method, and is usually from 0.1 m²·g⁻¹ to 100 m²·g⁻¹.
   Two or more carbonaceous materials with different properties may be contained in a negative electrode active material. Properties herein refer to one or more properties selected from the group consisting of an X-ray diffraction parameter, a median diameter, a Raman R-value, and a BET specific surface area.

Preferable examples of this are that the volume-based particle size distribution is not symmetrical when centered on the median diameter, that two or more carbonaceous materials with different Raman R values are contained, and that the X-ray parameters are different.

### [A2-2-4. Metal Particles Alloyable with Li]

Any conventionally known metal particle alloyable with Li can be used, and from the viewpoint of capacity and cycle life, the metal particle is preferably, for example, a metal selected from the group consisting of Sb, Si, Sn, Al, As, and Zn, or a compound thereof. An alloy of two or more metals may be used, and a metal particle may be an alloy particle formed by two or more kinds of metal elements.

Examples of a metal compound include a metal oxide, a metal nitride, and a metal carbide. An alloy composed of two or more kinds of metals may also be used. Among these, metal Si (hereinafter, referred to as Si) or an Si-containing compound is preferable from the viewpoint of high capacity.

Herein, Si or an Si-containing compound is collectively referred to as an Si compound. Specific examples of an Si compound include SiOₓ, SiNₓ, SiCₓ, and SiZₓO_{y} (Z=C, N). Si oxide (SiOₓ) is preferable as an Si compound from the viewpoint of high theoretical capacity compared to graphite, or amorphous Si or a nano-sized Si crystal is preferable from the viewpoint of facilitating entry and exit of an alkali ion such as lithium ion and obtaining a high capacity.

The general formula SiOₓ is obtained by using silicon dioxide (SiO₂) and Si as raw materials, and the value of x is usually 0 ≤ x < 2.

The average particle size (d50) of metal particle alloyable with Li is usually from 0.01 µm to 10 µm from the viewpoint of cycle life.

### [A2-2-5. Mixture of Metal Particle Alloyable with Li and Graphite Particle]

A mixture of metal particles alloyable with Li and graphite particles used as a negative electrode active material may be a mixture in which the above-described metal particles alloyable with Li and the above-described graphite particles are mixed with each other as independent particles, or may be a composite in which metal particles alloyable with Li are present on the surface or inside of graphite particles.

The ratio of metal particles alloyable with Li to the total of metal particles alloyable with Li and graphite particles is usually from 1% by mass to 99% by mass.

### [A2-2-6. Lithium-containing Metal Composite Oxide Material]

The lithium-containing metal composite oxide material used as a negative electrode active material is not particularly restricted as long as the material can absorb and release lithium, and lithium-containing composite metal oxide material containing titanium is preferable from the viewpoint of high current density charge/discharge characteristics, a composite oxide of lithium and titanium (hereinafter, sometimes abbreviated as "lithium-titanium composite oxide") is more preferable, and lithium-titanium composite oxide having a spinel structure is particularly preferable since the material considerably reduces output resistance.

Lithium or titanium in a lithium-titanium composite oxide may be substituted with at least one other metal element selected from the group consisting of Al, Ga, Cu, and Zn, for example.

As the lithium-titanium composite oxide, Li_{4/3}Ti_{5/3}O₄, LilTi₂O₄, or Li_{4/5}Ti₁₁/₅O₄ is preferable. As the lithium-titanium composite oxide in which lithium-titanium is partially replaced by other elements, for example, Li_{4/3}Ti_{4/3}Al₁/₃O₄ is preferable.

### [A2-2-7. Configuration and Manufacturing Method of Negative Electrode]

Any known method can be used to produce a negative electrode, as long as the method does not considerably impair an effect of the present invention. For example, a binder, a solvent, and, if necessary, a thickener, a conductive material, a filler, and the like are added to a negative electrode active material to make a slurry, which is then applied to a current collector, dried, and pressed to form a negative electrode.

### [A2-2-7-1. Current Collector]

Any known material can be used as a current collector to hold a negative electrode active material. Examples of a negative electrode current collector include a metal material such as aluminum, copper, nickel, stainless steel, or nickel-plated steel, and from the viewpoint of ease of production and cost, copper is especially preferable.

### [A2-2-7-2. Binder]

A binder to bind a negative electrode active material is not particularly restricted as long as the material is stable against a nonaqueous electrolytic solution or a solvent used in electrode production.

Examples thereof include a rubber-like polymer such as SBR (styrene butadiene rubber), isoprene rubber, butadiene rubber, fluoro rubber, NBR (acrylonitrile butadiene rubber), ethylene propylene rubber; and a fluoro-based polymer such as polyvinylidene fluoride, polytetrafluoroethylene and polytetrafluoroethylene ethylene copolymer. These may be used singly, or two or more kinds thereof may be used together in any combination and ratio.

The ratio of a binder to a negative electrode active material is usually from 0.1% by mass to 20% by mass.

In particular, when a rubber-like polymer represented by SBR is contained as a major component, the ratio of the binder to the negative electrode active material is usually from 0.1% by mass to 5% by mass. When a fluorinated polymer represented by polyvinylidene fluoride is contained as a major component, the ratio to the negative electrode active material is usually from 1% by mass to 15% by mass.

### [A2-2-7-3. Thickener]

A thickener is usually used to adjust the viscosity of a slurry. The thickener is not particularly restricted, and specific examples thereof include carboxymethyl cellulose, methyl cellulose, hydroxymethyl cellulose, ethyl cellulose, and polyvinyl alcohol. These may be used singly, or two or more kinds thereof may be used together in any combination and ratio.

When a thickener is further used, the ratio of the thickener to a negative electrode active material is usually from 0.1% by mass 5% by mass.

### [A2-2-8. Density of Electrode]

The electrode structure when a negative electrode active material is made into an electrode is not particularly limited, and the density of a negative electrode active material present on a current collector is usually form 1 g·cm⁻³ to 2.2 g·cm⁻³.

### [A2-2-9. Thickness of Negative Electrode Plate]

The thickness of a negative electrode plate is designed to match the thickness of a positive electrode plate used, and is not particularly limited, and the thickness of a composite layer, after subtracting the thickness of a metal foil of a core material, is usually from 15 um to 300 µm.

### [A2-2-10. Surface Coating of Negative Electrode Plate]

One with a substance of a different composition (surface-attached substance) adhered to the surface of the above-described negative electrode plate may also be used. Examples of the surface-attached substance include an oxide such as aluminum oxide, a sulfate such as lithium sulfate, and a carbonate such as lithium carbonate.

### [A2-3. Positive Electrode]

A positive electrode refers to one in which a positive electrode active material is at least partially present on the surface of a current collector.

### [A2-3-1. Positive Electrode Active Material]

In an embodiment of the present invention, a positive electrode active material used for a positive electrode includes a lithium transition metal compound represented by the following composition formula (IV).

Li₁₊ₓMO₂ ··· (IV)

In the composition formula (IV), x is from -0.1 to 0.5. Among them, the lower limit of x is preferably -0.05 or more, more preferably -0.03 or more, particularly preferable -0.02 or more, and most preferably -0.01 or more. The upper limit value of x may be 0.1 or less, and is preferably 0.06 or less, more preferably 0.028 or less, further preferably 0.020 or less, particularly preferable 0.010 or less, and most preferably 0.005 or less. When x is in the above-described range, effects of suppression of self-discharge, suppression of swelling, reduction of internal resistance, and reduction of capacity loss during contact charging due to a combination with compounds represented by formula (I) and/or (II) contained in an electrolytic solution are more likely to be sufficiently exhibited, which is preferable.

In the composition formula (IV), M is a plurality of elements including at least Ni, and may also contain Co or/and Mn. The Ni/M molar ratio is from 0.40 to 1.0. The lower limit of the molar ratio is preferably 0.45 or higher, more preferably 0.50 or more, and particularly preferably 0.55 or more. The upper limit of the molar ratio may be 0.95 or less, and is preferably 0.90 or less, and further preferably 0.85 or less.

When the Ni/M molar ratio is in the above-described range, the ratio of Ni involved in charging and discharging is sufficiently large, and a battery has a high capacity, which is preferable.

When M contains Co, the Co/M molar ratio in the composition formula (IV) is not particularly limited, and is preferably 0.05 or more, more preferably 0.08 or more, and further preferably 0.10 or more. The ratio is preferably 0.35 or less, more preferably 0.30 or less, further preferably 0.25 or less, particularly preferably 0.20 or less, and most preferably 0.15 or less. When the Co/M molar ratio is in the above-described range, the charge/discharge capacity is preferable since the charge/discharge capacity is large.

When M contains Mn, the Mn/M molar ratio is not particularly limited, and is 0 or more, and is preferably 0.05 or more, more preferably 0.08 or more, and further preferably 0.10 or more. The ratio may be 0.35 or less, and is preferably 0.30 or less, more preferably 0.25 or less, further preferably 0.20 or less, and particularly preferably 0.15 or less.

When the above-described Mn/M molar ratio is in the above-described range, the ratio of Mn not involved in charging/discharging becomes sufficiently small, which is preferable since a battery will have a high capacity.

Among others, a lithium transition metal composite oxide having a layered structure is preferable, and a transition metal oxide represented by the composition formula (1) below is more preferable.

Liₐ₁Ni_{b1}CO_{c1}M_{d1}O₂ ··· (V)

In the composition formula (V), a1, b1, c1, and d1 represent numerical values satisfying 0.90 ≤ a1 ≤ 1.10, 0.40 ≤ b1 ≤ 0.98, 0.01 ≤ c1 ≤ 0.5, and 0.00 ≤ d1 ≤ 0.50, respectively, and 0.50 ≤ b1 + c1 and b1 + c1 + d1 = 1 is satisfied. M represents at least one kind of element selected from the group consisting of Mn, Al, Mg, Zr, Fe, Ti, and Er.

In the composition formula (V), a value of 0.01 ≤ d1 ≤ 0.50 is preferable.

In particular, a transition metal oxide represented by the composition formula (2) below is preferable.

Liₐ₂Ni_{b2}CO_{c2}M_{d2}O₂ ... (VI)

In the formula (VI), a2, b2, c2, and d2 represent numerical values satisfying 0.90 ≤ a2 ≤ 1.10, 0.60 ≤ b2 ≤ 0.98, 0.01 ≤ c2 < 0.50, 0.01 ≤ d2 < 0.50, respectively, and b2 + c2 + d2 = 1 is satisfied. M represents at least one element selected from the group consisting of Mn, Al, Mg, Zr, Fe, Ti, and Er.

Suitable specific examples of a lithium transition metal oxide represented by the composition formula (VI) include LiNi_{0.85}Co_{0.10}Al_{0.05}O₂, LiNi_{0.80}Co_{0.15}Al_{0.05}O₂, LiNi_{0.3}Co_{0.2}Mn_{0.3}O₂, Li_{1.05}Ni_{0.50}Co_{0.20}Mn_{0.30}O₂, LiNi_{0.6}Co_{0.2}Mn_{0.2}O₂, and LiNi_{0.8}Co_{0.1}Mn_{0.1}O₂.

In each of the above-described composition formulas, M preferably contains Mn or Al, more preferably contains Mn, and further preferably contains Mn or Al. This is because the structural stability of a lithium transition metal oxide is increased and structural degradation is suppressed after repeated charging and discharging.

### [A2-3-1-1. Introduction of Different Element]

A lithium transition metal compound may introduce a different element other than those prescribed in the above-described composition formula (I).

### [A2-3-1-2. Surface Coating]

A substance (surface-attached substance) with a composition different from this may be attached to the surface of the above-described positive electrode active material. This surface-attached substance is treated as included in a positive electrode active material. Examples of the surface-attached substance include an oxide such as aluminum oxide, a sulfate such as lithium sulfate, and a carbonate such as lithium carbonate, and carbonate is preferable since the carbonate improves the affinity of a compound represented by the above-described formulas (I) and (II) and a positive electrode.

These surface-attached substances can be attached to the surface of a positive electrode active material by, for example, dissolving or suspending the substance in a solvent, impregnating and adding the solution or suspension to the positive electrode active material, and then drying the solvent.

The lower limit of the amount of a surface-attached substance with respect to the positive electrode active material by mass is preferably 1 µmol/g or more, preferably 10 µmol/g or more, more preferably 15 µmol/g or more, further preferably 20 µmol/g or more, and the substance is usually used in an amount of 1 mmol/g or less.

Herein, one in which a substance of a different composition is attached to the surface of a positive electrode active material is also referred to as a "positive electrode active material".

The amount of a surface-attached substance in a positive electrode active material described above is measured by ion chromatography.

### [A2-3-1-3. Blend]

These positive electrode active materials may be used singly, or two or more kinds thereof may be used together in any combination and ratio.

### [A2-3-2. Configuration and Manufacturing Method of Positive Electrode]

The configuration of a positive electrode will be described below. In the present embodiment, a positive electrode can be manufactured by forming a positive electrode active material layer containing a positive electrode active material and a binding agent on a current collector. Production of a positive electrode using a positive electrode active material can be performed by a conventional method. In other words, a positive electrode can be obtained by forming a positive electrode active material layer on a current collector either by dry mixing a positive electrode active material, a binding agent, and, if necessary, a conductive material and a thickener, and the like in a sheet form and pressing the sheet onto a positive electrode current collector or by dissolving or dispersing these materials in a liquid medium to make a slurry, applying the slurry to a positive electrode current collector, and drying the slurry. For example, the above-described positive electrode active material may be roll-formed into a sheet electrode or compression-molded into a pellet electrode.

Hereafter, the case of applying and drying a slurry to a positive electrode current collector will be described.

### [A2-3-2-1. Active Material Content]

The content of a positive electrode active material in a positive electrode active material layer is usually from 80% by mass to 98% by mass.

### [A2-3-2-2. Density of Positive Electrode Active Material Layer]

A positive electrode active material layer obtained by applying and drying is preferably compacted by hand press, roller press, or the like to increase the packing density of a positive electrode active material. The density of a positive electrode active material layer is usually 1.5 g/cm³ or more, preferably 3.0 g/cm³ or more, further preferably 3.3 g/cm³ or more, and usually 3.8 g/cm³ or less.

### [A2-3-2-3. Conductive Material]

Any known conductive material can be used as a conductive material. Specific examples thereof include a metal material such as copper or nickel. These may be used singly, or two or more kinds thereof may be used together in any combination and ratio. A conductive material is used in a positive electrode active material layer in such a manner that the conductive material usually contains from 0.01% by mass to 50% by mass.

### [A2-3-2-4. Binding Agent]

A binding agent used in production of a positive electrode active material layer is not particularly limited, and in the case of a coating method, the type of a binding agent is not particularly restricted as long as the material is dissolved or dispersed in a liquid medium used during electrode production, and from the viewpoint of weather resistance, chemical resistance, heat resistance, flame resistance, and the like, a fluorinated resin such as polyvinyl fluoride, polyvinylidene fluoride, or polytetrafluoroethylene; a CN group-containing polymer such as polyacrylonitrile or polyvinylidene cyanide, or the like is preferable.

A mixture, a modification, a derivative, a random copolymer, an alternating copolymer, a graft copolymer, a block copolymer, or the like of the above-described polymers and the like may also be used. Binding agents may be used singly, or two or more kinds thereof may be used in any combination and ratio.

When a resin is used as a binding agent, the weight average molecular weight of the resin is any amount as long as such a weight does not considerably impair an effect of the present invention, and is usually from 10,000 and 3,000,000. When the molecular weight is in this range, the strength of an electrode is improved, and the electrode can be formed suitably.

The ratio of a binding agent in a positive electrode active material layer is usually from 0.1% by mass to 80% by mass.

### [A2-3-2-5. Solvent]

The type of a solvent used to form a slurry is not particularly restricted, as long as the solvent is capable of dissolving or dispersing a positive electrode active material, a conductive material, a binding agent, and if necessary, a thickener, and either an aqueous solvent or an organic solvent can be used.

### [A2-3-2-6. Current Collector]

The material of a positive electrode current collector is not particularly restricted, and any known material can be used. Specific examples thereof include a metal material such as aluminum, stainless steel, nickel plating, titanium, or tantalum. Among these, aluminum is preferable.

Examples of the shape of a current collector include a metal foil, a metal cylinder, a metal coil, a metal plate, a metal thin film, an expanded metal, a punched metal, and a foamed metal. Among these, a metal thin film is preferable. A thin film may be formed into a mesh as appropriate.

### [A2-3-2-7. Thickness of Positive Electrode Plate]

The thickness of a positive electrode plate is not particularly restricted, and from the viewpoint of high capacity and high output, the thickness of a composite layer, after subtracting the thickness of a metal foil of a core material, is usually from 10 um to 500 µm for one side of a current collector.

### [A2-3-2-7. Surface Coating of Positive Electrode Plate]

One with a substance of a different composition adhered to the surface of the above-described positive electrode plate may also be used, and the same substance as the above-described surface-attached substance is used.

### [A2-4. Separator]

Usually a separator is interposed between a positive electrode and a negative electrode to prevent a short circuit. In this case, a nonaqueous electrolytic solution is usually impregnated into this separator.

The material and shape of a separator are not particularly restricted, and any known material can be employed as long as they do not considerably impair an effect of the present invention. Among others, it is preferable to use a porous sheet or a non-woven fabric form that is made of a material stable to nonaqueous electrolytic solution, such as a resin, a glass fiber, or an inorganic material, and has excellent liquid-retaining properties.

### [A2-4-1. Material]

Examples of the material of a separator include a glass filter and polyolefin, and the material is preferably polyolefin, and particularly preferably polyethylene and polypropylene. These materials may be used singly, or two or more kinds thereof may be used together in any combination and ratio. The above-described materials may be used in a layered manner.

### [A2-4-2. Thickness]

The thickness of a separator is any thickness, and is usually from 1 µm to 5 µm.

### [A2-4-3. Porosity]

When a porous material such as a porous sheet or a nonwoven fabric is used as a separator, the porosity of the separator is any, and is usually from 20% to 90%.

### [A2-4-4. Form]

The form can be a thin film shape such as a nonwoven fabric, a woven fabric, or a microporous film. In the case of a thin film shape, a pore diameter of from 0.01 to 1 µm and a thickness of from 5 to 50 um are suitable. In addition to the above-described independent thin-film shape, a separator obtained by forming a composite porous layer containing the above-described inorganic particles on the surface layer of a positive electrode and/or a negative electrode using a resin binding material may also be used.

### [A2-4-5. Air Permeability]

The characteristics of a separator in a nonaqueous electrolytic solution secondary battery can be determined by the Gurley value. The Gurley value indicates the difficulty for air to pass through a film in the direction of the thickness, and is expressed as the number of seconds required for 100 ml of air to pass through the film. The Gurley value of a separator is any value, and is usually from 10 to 1,000 seconds/100 ml.

### [A2-5. Battery Design]

### [A2-5-1. Electrode Group]

An electrode group may have either a layered structure composed of the above-described positive electrode plate and the above-described negative electrode plate via the above-described separator, or a spirally wound structure composed of the above-described positive electrode plate and the above-described negative electrode plate via the above-described separator. The ratio of the volume of an electrode group to the internal volume of a battery (hereinafter, referred to as "electrode group occupancy") is usually from 40% to 90%.

### [A2-5-2. Current Collecting Structure]

In the above-described layered structure of an electrode group, a structure formed by bundling a metal core portion of each electrode layer and welding the bundle to a terminal is suitably used. Providing a plurality of terminals in an electrode to reduce resistance is also suitably employed. In the case of an electrode group having the above-described wound structure, the internal resistance can be lowered by providing a plurality of lead structures for a positive electrode and a negative electrode, respectively, and bundling them together at the terminals.

### [A2-5-3. Protective Element]

As protective elements, a PTC (Positive Temperature Coefficient), which increases resistance when abnormal heat generation or excessive current flows, a thermal fuse, a thermistor, or a valve (current shutoff valve), which interrupts the current flowing in the circuit due to a sudden increase in the internal pressure or internal temperature of a battery when abnormal heat generation occurs, can be used. It is preferable to select a protective element that does not operate under normal use of high current, and it is more preferable to design a protective element that does not cause abnormal heat generation or thermal runaway even without a protective element.

### [A2-5-4. Outer Packaging Body]

A nonaqueous electrolytic solution secondary battery is usually composed of the above-described nonaqueous electrolytic solution, a negative electrode, a positive electrode, a separator, and the like stored in an outer packaging body (outer packaging case). This outer packaging body is not limited, and any known material can be employed as long as the body does not considerably impair an effect of the present invention.

The material of an outer packaging case is not particularly limited as long as the case is stable to a nonaqueous electrolytic solution to be used, and aluminum or an aluminum alloy metal and a laminate film are suitable from the viewpoint of weight reduction.

Examples of an outer packaging case using the above-described metal include a case having a hermetically sealed structure by welding metals together using laser welding, resistance welding, or ultrasonic welding, or a case with a welded structure using the above-described metal via a resin gasket.

### [A2-5-5. Shape]

The shape of an outer packaging case is also any, and may be cylindrical, rectangular, laminated, coin-shaped, large, or the like.

### < B. Second Embodiment >

Hereinafter, embodiments of the present invention will be described in detail. However, the description below is an example (representative example) of embodiments of the present invention, and the present invention is not limited to the contents of these descriptions as far as they do not exceed the gist of the claims.

One embodiment of a second aspect of the present invention relates to a nonaqueous electrolytic solution and a nonaqueous electrolytic solution secondary battery including the electrolytic solution, including a positive electrode containing a positive electrode active material capable of absorbing and releasing a metal ion, a negative electrode containing a negative electrode active material capable of absorbing and releasing a metal ion, and a nonaqueous electrolytic solution. Hereinafter, each configuration will be described.

### [B1. Nonaqueous Electrolytic Solution]

### [B1-1-1. Compound Represented by Formula (I) and/or (II)]

A nonaqueous electrolytic solution used in the nonaqueous electrolytic solution secondary battery of the embodiment of the present invention contains an electrolyte and a nonaqueous solvent that dissolves the electrolyte, in the same manner as a general nonaqueous electrolytic solution, and especially contains a compound represented by the following formula (I) and/or (II).

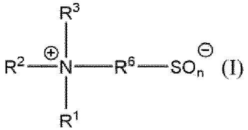

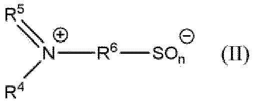

In the above-described formulas (I) and (II), R¹ to R⁵ are organic groups having from 1 to 18 carbon atoms that are independent or bonded to each other. The organic group is a carbon atom-based group, and the carbon atom-based group may have an alkyl group, an alkenyl group, an alkynyl group, an aryl group, or an alkoxy group as a substituent, a hydrogen atom bonded to a carbon atom of the carbon atom-based group may be substituted with a halogen atom, some carbon atoms of the carbon atom-based group may be substituted with an oxygen atom to form an ether bond or an ester bond, and some carbon atoms of the carbon atom-based group may be substituted with a nitrogen atom. R¹ to R⁵ (especially R¹ to R³) are preferably hydrocarbon groups having from 1 to 15 carbon atoms that are independent or bonded to each other, and are more preferably alkyl groups that are independent to each other, and are further preferably a methyl group or an ethyl group from the viewpoint of suppressing increase in internal resistance. R¹ to R³ and R⁴ to R⁵ may each be bonded to each other to form a ring. The number of rings formed may be one or two or more. A compound in which R¹ and R² are methyl groups in the above-described formula (I) is preferable.

R⁶ is a spacer group and is a divalent hydrocarbon group having from 1 to 4 carbon atoms, and preferably a divalent hydrocarbon group having from 1 to 3 carbon atoms.

n is from 2 to 4, preferably 3 or 4, and more preferably 3.

Examples of a compound represented by the above-described formulas (I) and (II) include a compound in which a positive charge exists on a nitrogen atom and a negative charge exists on an oxygen atom bonded to a sulfur atom, such as the following compounds.

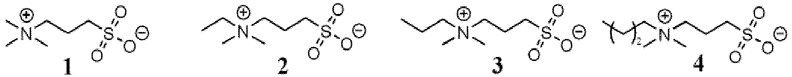

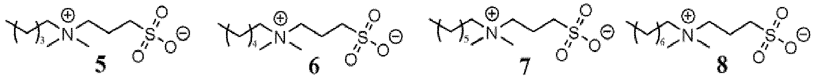

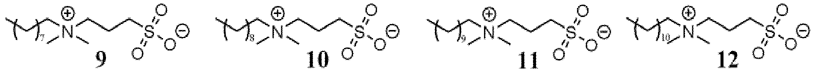

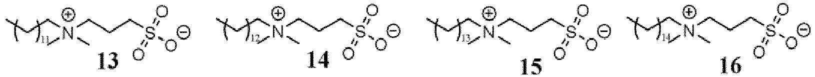

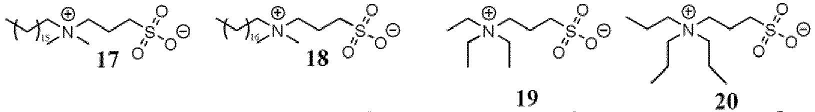

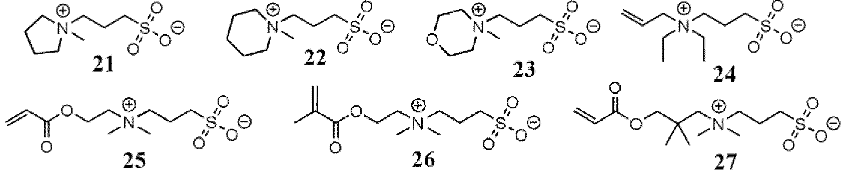

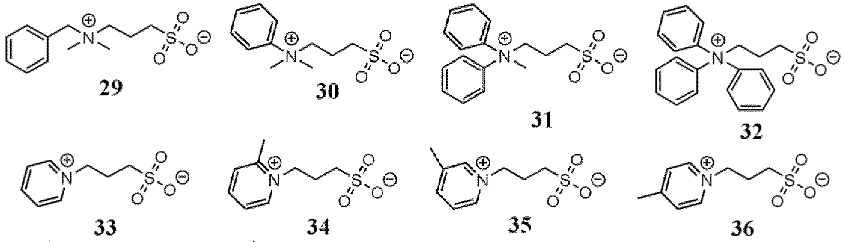

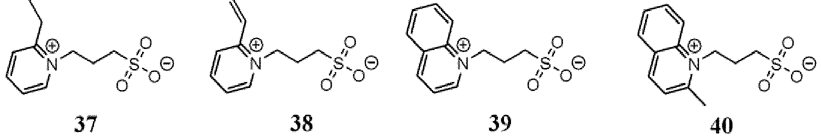

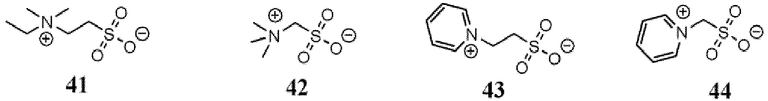

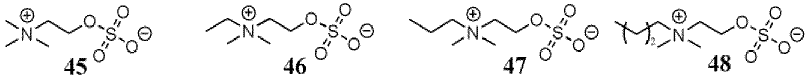

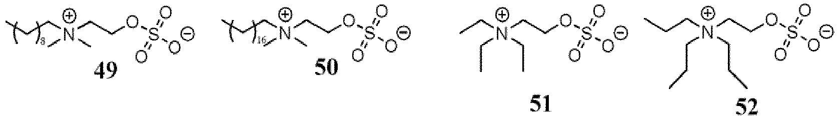

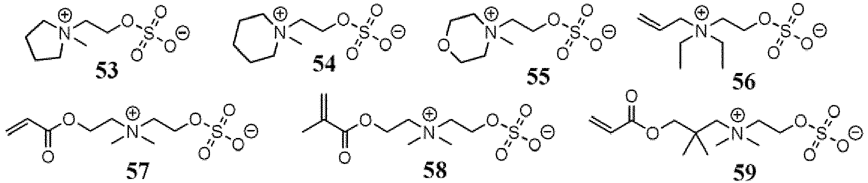

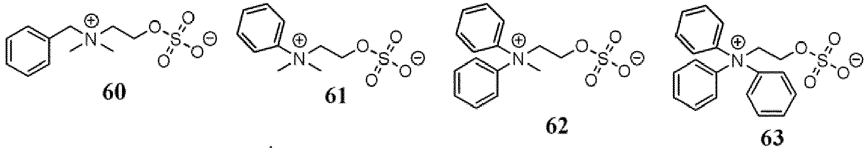

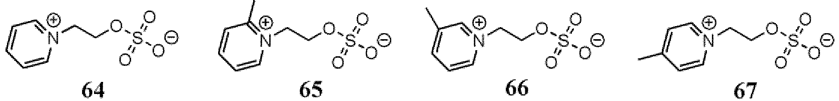

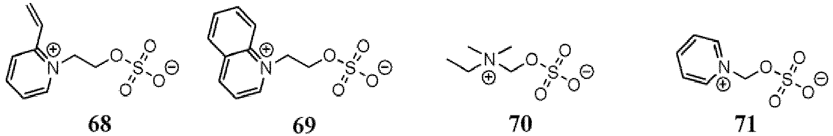

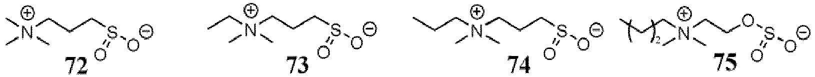

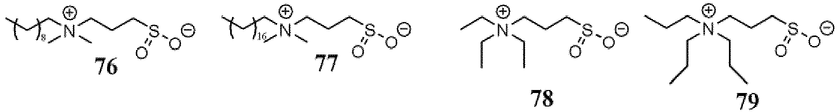

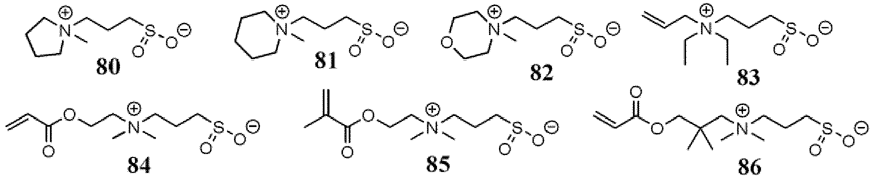

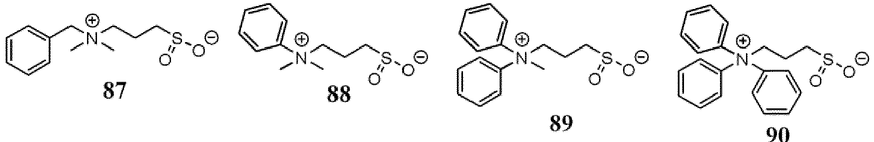

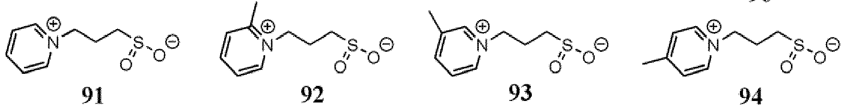

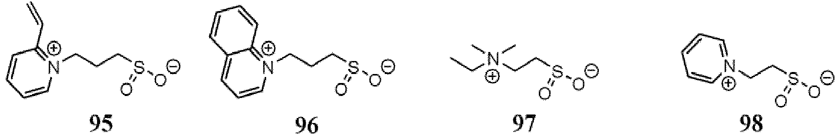

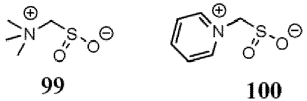

Of these, a compound in which R¹ and R² in the above-described formula (I) are methyl groups is preferable. When R¹ to R³ and R⁴ to R⁵ in formulas (I) and (II) are bonded to each other to form a ring, the formed ring is preferably a 5- or 6-membered nitrogen-containing heterocycle optionally containing a substituent, and more preferably a 6-membered nitrogen-containing heterocycle optionally containing a substituent. One or more additional rings may be condensed to a ring to be formed, and a ring to be formed may further contain an oxygen atom.

Examples of the 5- or 6-membered nitrogen-containing heterocycle include pyrrolidinium, piperidinium, pyridinium, imidazolium, pyrazolium, pyrimidinium, triazinium, and triazolium. Among these, piperidinium and pyridinium are preferred in terms of suppressing side reactions with a negative electrode.

Examples of an optional substituent in the above-described ring include alkyl, alkenyl, and alkynyl groups, which may contain a fluorine atom and/or an oxygen atom. Among these, an alkyl group and an alkenyl group are preferred in terms of adsorption to a positive electrode.

Among compounds represented by the above-described formula (II), particularly preferred are compounds represented by the following formula (III). 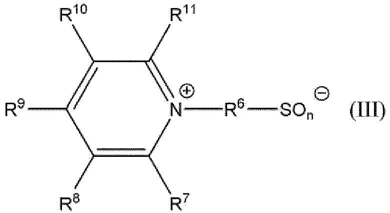
R⁶ in the above-described formula (III) is synonymous with R⁶ in the above-described formula (II).
R⁷ to R¹¹ may be the same or different from each other and are a hydrogen atom, a halogen atom, or a hydrocarbon group.
n is synonymous with n in the above-described formula (II) .

Examples of a halogen atom include a chlorine atom and a fluorine atom. Preferably, the halogen atom is a fluorine atom.

Examples of a hydrocarbon group include an alkyl group, an alkenyl group, and an alkynyl group, which may contain a fluorine atom and/or an oxygen atom. Preferably, the hydrocarbon group is an alkyl group or an alkenyl group.

Specific examples of an alkyl group include a methyl group, an ethyl group, an *n*-propyl group, an iso-propyl group, an *n*-butyl group, a *tert*-butyl group, an *n*-pentyl group, a hexyl group, a heptyl group, an octyl group, a nonyl group, and a decyl group. Among these, examples of a preferable alkyl group include a methyl group, an ethyl group, an *n*-propyl group, an *n*-butyl group, a *tert*-butyl group, an *n*-pentyl group, a hexyl group, and an ethyl group, examples of a further preferable alkyl group include a methyl group, an ethyl group, an *n*-propyl group, an *n*-butyl group, a *tert*-butyl group, an *n-*pentyl group, and an *n*-pentyl group, and examples of a particularly preferable alkyl group include a methyl group, an ethyl group, an *n*-butyl group, a *tert*-butyl group, and a *tert-*butyl group. The above-described alkyl groups are preferred because the compound represented by formula (III) tends to be localized near the surface of a positive electrode active material.

Examples of an alkenyl group include a vinyl group, an allyl group, a methallyl group, a 2-butenyl group, a 3-methyl 2-butenyl group, a 3-butenyl group, and a 4-pentenyl group. Among these, examples of a preferable alkenyl group include a vinyl group, an allyl group, a methallyl group, and a 2-butenyl group, examples of a further preferable alkenyl group include a vinyl group, an allyl group, a methallyl group, and examples of a particularly preferable alkenyl group include a vinyl group or an allyl group. The above-described alkenyl group is preferred because a compound represented by formula (III) tends to be localized near the surface of a positive electrode active material.

Specific examples of an alkynyl group include an ethynyl group, a 2-propynyl group, a 2-butynyl group, a 3-butynyl group, a 4-pentynyl group, and a 5-hexynyl group. Among them, examples of a preferable alkynyl group include an ethynyl group, a 2-propynyl group, a 2-butynyl group, and a 3-butynyl group, examples of a more preferable alkynyl group include a 2-propynyl group and a 3-butynyl group, and examples of a particularly preferable alkynyl group include a 2-propynyl group. The above-described alkynyl group is preferred because a compound represented by formula (III) tends to be localized near the surface of a positive electrode active material.

Only one or two or more of compounds represented by formulas (I) and (II) may be contained.

The molecular weight of a compound represented by the above-described formulas (I) and (II) is not particularly limited, and is usually 100 or more, and is usually 2,000 or less, preferably 1,000 or less, more preferably 500 or less, and especially preferably 300 or less. When the molecular weight is within the above-described range, the compound is easy to handle and the viscosity of an electrolytic solution containing the compound can be made suitable.

The content of a compound represented by the above-described formulas (I) and (II) in a nonaqueous electrolytic solution is not particularly limited, and is usually 0.001% by mass or more, preferably 0.01% by mass or more, and further preferably 0.1% by mass or more, and the content is usually 8% by mass or less, more preferably 4% by mass or less, further preferably 2% by mass or less, and most preferably 1% by mass or less.

The content of (I) and/or (II) compounds is measured using magnetic resonance spectroscopy or the like.

### [B1-1-2. Specific Additive]

The nonaqueous electrolytic solution used in the nonaqueous electrolytic solution secondary battery according to the embodiment of the present invention further contains at least one compound selected from the group consisting of a fluorophosphate containing a P=O bond, a salt having an FSO₂ skeleton, an oxalate, and an organic compound containing an S=O bond (hereinafter, also referred to as a combination additive) (Y), wherein the content of the compound is from 0.001 to 5% by mass. Among others, from the viewpoint of low temperature discharge characteristics, at least one compound selected from the group consisting of a fluorophosphate containing a P=O bond, a salt having an FSO₂ skeleton, and an oxalate are preferable.

The above-described compound (Y) is contained in a nonaqueous electrolytic solution in an amount of usually 0.001% by mass or more, preferably 0.01% by mass or more, and usually 10% by mass or less, preferably 5% by mass or less, more preferably 3% by mass or less, further preferably 2% by mass or less, and especially preferably 1% by mass or less.

In the present embodiment, the content (mass) of a compound (X) represented by the above-described formula (I) and/or (II) in a nonaqueous electrolytic solution is equal to or less than the content (mass) of the above-described compound (X) . The content (mass) of the above-described compound (X) in a nonaqueous electrolytic solution with respect to the above-described compound (Y) may be 80% or less, and is preferably 60% or less, and more preferably 40% or less. When the content of the above-described compound (X) in comparison with the content of the above-described compound (Y) is in a specific range, an effect obtained by the configuration of the present embodiment is more remarkable.

### [B1-1-2-1. Organic Compound Containing S=O bond]

An organic compound containing an S=O bond is not particularly restricted as long as the organic compound is an organic compound that contains at least one S=O bond in the molecule. An ester compound containing an S=O bond is preferred, and a compound selected from the group consisting of sulfonate (chain sulfonate or cyclic sulfonate), sulfate (chain sulfate or cyclic sulfate), or sulfite (chain sulfite or cyclic sulfite) is more preferred. Specific examples are shown below. However, those falling under salts having an FSO₂ skeleton are not "organic compounds containing an S=O bond" but are included in "salts having an FSO₂ skeleton" as described below, and compounds represented by the above-described formula (I) are not included.

A chain sulfonate such as an alkyl disulfonate such as methyl fluorosulfonate, methyl methanesulfonate, ethyl methanesulfonate, busulfan, methyl methanesulfonyloxyacetate, methyl vinyl sulfonate, allyl vinyl sulfonate, propargylic allylsulfonate, methoxycarbonyl methyl methane disulfonate, ethoxycarbonylmethyl methane disulfonate, 1,3-butanedisulfonate methoxycarbonylmethyl methane, 1,3-butanedisulfonate ethoxycarbonylmethyl methane, 1,3-butanedisulfonate 1-methoxycarbonylethyl methane, or 1,3-butanedisulfonate 1-ethoxycarbonylethyl ethane;
a cyclic sulfonate ester such as 1,3-propanesultone, 1-fluoro-1,3-propanesultone, 1-methyl-1,3-propanesultone, 1-propene-1,3-sultone, 2-propene-1,3-sultone, 1-fluoro-1-propene-1,3-sultone, 1-methyl-1-propene-1,3-sultone, 1,4-butane-sultone, 1,5-pentane-sultone, methylene methane disulfonate, or ethylene methane disulfonate;
a chain sulfate such as dimethyl sulfate, ethyl methyl sulfate, or diethyl sulfate;
a cyclic sulfate such as 1,2-ethylene sulfate, 1,2-propylene sulfate, 1,3-propylene sulfate, or 1,2-butylene sulfate;
a chain sulfite ester such as dimethyl sulfite, ethyl methyl sulfite, or diethyl sulfite;
a cyclic sulfite ester such as 1,2-ethylene sulfite, 1,2-propylene sulfite, 1,3-propylene sulfite, or 1,2-butylene sulfite:
   In particular, from the viewpoint of further enhancing an effect of improving charge/discharge rate characteristics and impedance characteristics, in addition to a gas suppression effect during high temperature storage, sulfonic acid (chain sulfonate or cyclic sulfonate) or a sulfate (a chain sulfate or a cyclic sulfate) is preferred, a chain sulfonate, a cyclic sulfonate, or a cyclic sulfate is more preferred, and 1,3-propanesultone, methylene methane disulfonate, and 1,2-ethylene sulfate are further preferred.

Organic compounds containing an S=O bond may be used singly or in combination with two or more kinds thereof in any combination and ratio. The content of organic compound containing an S=O bond (in case of two or more kinds, the total amount), in 100% by mass of nonaqueous electrolytic solution, is 0.001% by mass or more, preferably 0.01% by mass or more, more preferably 0.1 % by mass or more, and is 5% by mass or less, and preferably 3% by mass or less. When the content of an organic compound containing an S=O bond is in this range, nonaqueous electrolytic solution secondary battery characteristics, especially durability characteristics or continuous charging characteristics, can be considerably improved. Although the principle behind this is not known, it is believed that this is because mixing additives at this ratio minimizes side reactions of an additive on an electrode.

With respect to the mass ratio of a compound represented by formula (I) above to an organic compound containing an S=O bond (in the case of two or more kinds, the total amount), the compound represented by formula (I) to the organic compound containing an S=O bond is usually 1/100 or more, preferably 10/100 or more, more preferably 20/100 or more, further preferably 25/100 or more, and usually 10,000/100, preferably 500/100 or less, more preferably 100/100, particularly preferably 80/100 or less, and most preferably 40/100 or less. When the mass ratio is in this range, nonaqueous electrolytic solution secondary battery characteristics, especially durability characteristics or continuous charging characteristics, can be considerably improved. Although the principle behind this is not known, it is believed that this is because mixing additives at this ratio minimizes side reactions of an additive on an electrode.

When LiPF₆ is contained in a nonaqueous electrolytic solution, the mass ratio (organic compound containing S=O bond/LiPF₆) of an organic compound containing an S=O bond (in the case of two or more kinds, the total amount) to the content of LiPF₆ is usually 0.00005 or more, preferably 0.001 or more, more preferably 0.01 or more, further preferably 0.02 or more, particularly preferably 0.025 or more, usually 1.0 or less, preferably 0.5 or less, more preferably 0.4 or less, and further preferably 0.35 or less. When the mass ratio is in this range, nonaqueous electrolytic solution secondary battery characteristics, especially durability characteristics or continuous charging characteristics, can be considerably improved. Although the principle behind this is not known, it is believed that mixing LiPF₆ at this ratio minimizes decomposition side reaction of LiPF₆ in a nonaqueous electrolytic solution secondary battery.

### [B1-1-2-2. Fluorophosphate Containing P=O Bond]

Fluorophosphate containing a P=O bond used in the present embodiment is not particularly restricted as long as the phosphate contains a P=O bond and a P-F bond in the molecule.

Examples of a countercation for a phosphate containing a P=O bond and a P-F bond include an alkali metal such as lithium, sodium, or potassium, and among these, lithium is preferable.

Examples of a fluorophosphate containing a P=O bond include
monofluorophosphate such as Li₂PO₃F; and
difluorophosphate such as LiPO₂F₂, NaPO₂F₂, KPO₂F₂.

In particular, from the viewpoint of further enhancing an effect of improving charge/discharge rate characteristics and impedance characteristics, in addition to gas suppression effect during high temperature storage, lithium difluorophosphate is preferable, and lithium difluorophosphate is more preferable.

Fluorophosphate containing a P=O bond may be used singly or in combination with two or more kinds thereof in any combination and ratio. The content of a fluorophosphate containing a P=O bond (in case of two or more kinds, the total amount), in 100 mass% of the nonaqueous electrolytic solution, is 0.001% by mass or more, preferably 0.01% by mass or more, more preferably 0.1% by mass or more, and is 5% by mass or less, and preferably 3% by mass or less. When the content of a fluorophosphate containing a P=O bond is in this range, nonaqueous electrolytic solution secondary battery characteristics, especially durability characteristics or continuous charging characteristics, can be considerably improved. Although the principle behind this is not known, it is believed that this is because mixing additives at this ratio minimizes side reactions of an additive on an electrode.

With respect to the mass ratio of a compound represented by formula (I) above to a fluorophosphate containing a P=O bond (in the case of two or more kinds, the total amount), the compound represented by formula (I) to the fluorophosphate containing a P=O bond is usually 1/100 or more, preferably 10/100 or more, more preferably 20/100 or more, further preferably 25/100 or more, and usually 10,000/100, preferably 500/100 or less, more preferably 100/100, particularly preferably 80/100 or less, and most preferably 40/100 or less. When the mass ratio is in this range, nonaqueous electrolytic solution secondary battery characteristics, especially durability characteristics or continuous charging characteristics, can be considerably improved. Although the principle behind this is not known, it is believed that this is because mixing additives at this ratio minimizes side reactions of an additive on an electrode.

When LiPF₆ is contained in a nonaqueous electrolytic solution, the mass ratio (fluorophosphate containing a P=O bond/LiPF₆) of a fluorophosphate containing a P=O bond (in the case of two or more kinds, the total amount) to the content of LiPF₆ is usually 0.00005 or more, preferably 0.001 or more, more preferably 0.01 or more, further preferably 0.02 or more, particularly preferably 0.025 or more, usually 1.0 or less, preferably 0.5 or less, more preferably 0.4 or less, and further preferably 0.35 or less. When the mass ratio is in this range, nonaqueous electrolytic solution secondary battery characteristics, especially durability characteristics or continuous charging characteristics, can be considerably improved. Although the principle behind this is not known, it is believed that mixing LiPF₆ at this ratio minimizes decomposition side reaction of LiPF₆ in a nonaqueous electrolytic solution secondary battery.

### [B1-1-2-3. Salt Having FSO₂ Skeleton]

The salt having an FSO2 skeleton used in the present embodiment is not particularly restricted as long as the salt has an FSO2 skeleton in the molecule.

Examples of a countercation for a salt having an FSO₂ skeleton include an alkali metal such as lithium, sodium, or potassium, and among these, lithium is preferable.

Examples thereof include a fluorosulfonate such as FSO₃Li, FSO₃Na, FSO₃K, FSO₃(CH₃)₄N, FSO₃(C₂H₅)₄N, or FSO₃(n-C₄H₉)₄N;
a fluorosulfonylimide salt such as LiN(FSO₂)₂, or LiN(FSO₂)(CF₃SO₂); and
a fluorosulfonyl methide salt such as LiC(FSO₂)₃.

In particular, from the viewpoint of further improving an effect of charge/discharge rate characteristics and impedance characteristics, in addition to gas suppression effect during high temperature storage, a fluorosulfonate is preferable, and lithium fluorosulfonate is more preferable.

A salt having an FSO₂ skeleton may be used singly or in combination with two or more kinds thereof in any combination and ratio. The content of a salt having an FSO₂ skeleton (in case of two or more kinds, the total amount), in 100 mass% of the nonaqueous electrolytic solution, can be 0.001% by mass or more, preferably 0.01% by mass or more, more preferably 0.1% by mass or more, and is 5% by mass or less, and is preferably 3% by mass or less. When the content of a salt having an FSO₂ skeleton is in this range, nonaqueous electrolytic solution secondary battery characteristics, especially durability characteristics or continuous charging characteristics, can be considerably improved. Although the principle behind this is not known, it is believed that this is because mixing additives at this ratio minimizes side reactions of an additive on an electrode.

With respect to the mass ratio of a compound represented by formula (I) above to a salt having an FSO₂ skeleton (in the case of two or more kinds, the total amount), the compound represented by formula (I) to the salt having an FSO₂ skeleton is usually 1/100 or more, preferably 10/100 or more, more preferably 20/100 or more, further preferably 25/100 or more, and usually 10,000/100, preferably 500/100 or less, more preferably 100/100, particularly preferably 80/100 or less, and most preferably 40/100 or less. When the mass ratio is in this range, nonaqueous electrolytic solution secondary battery characteristics, especially durability characteristics or continuous charging characteristics, can be considerably improved. Although the principle behind this is not known, it is believed that this is because mixing additives at this ratio minimizes side reactions of an additive on an electrode.

When LiPF₆ is contained in a nonaqueous electrolytic solution, the mass ratio (salt having an FSO₂ skeleton /LiPF₆) of a salt having an FSO₂ skeleton (in the case of two or more kinds, the total amount) to the content of LiPF₆ is usually 0.00005 or more, preferably 0.001 or more, more preferably 0.01 or more, further preferably 0.02 or more, particularly preferably 0.025 or more, usually 1.0 or less, preferably 0.5 or less, more preferably 0.4 or less, and further preferably 0.35 or less. When the mass ratio is in this range, nonaqueous electrolytic solution secondary battery characteristics, especially durability characteristics or continuous charging characteristics, can be considerably improved. Although the principle behind this is not known, it is believed that mixing LiPF₆ at this ratio minimizes decomposition side reaction of LiPF₆ in a nonaqueous electrolytic solution secondary battery.

### [B1-1-2-4. Oxalate]

An oxalate is not particularly restricted as long as the oxalate is a compound having at least one oxalic acid skeleton in the molecule.

Examples of a countercation for an oxalate include an alkali metal such as lithium, sodium, or potassium, and among these, lithium is preferable.

Examples thereof include an oxalate borate salt such as lithium bis(oxalate)borate or lithium difluorooxalate borate; and
an oxalate phosphate salt such as lithium tetrafluorooxalate phosphate, lithium difluorobis(oxalate)phosphate, or lithium tris(oxalate)phosphate.

In particular, from the viewpoint of further improving an effect of charge/discharge rate characteristics and impedance characteristics, in addition to gas suppression effect during high temperature storage, an oxalate borate salt is preferable, and lithium bis(oxalate)borate is more preferable.

An oxalate may be used singly or in combination with two or more kinds thereof in any combination and ratio. The content of an oxalate (in case of two or more kinds, the total amount), in 100 mass% of the nonaqueous electrolytic solution, can be 0.001% by mass or more, preferably 0.01% by mass or more, more preferably 0.1% by mass or more, and is 5% by mass or less, and is preferably 3% by mass or less. When the content of an oxalate is in this range, nonaqueous electrolytic solution secondary battery characteristics, especially durability characteristics or continuous charging characteristics, can be considerably improved. Although the principle behind this is not known, it is believed that this is because mixing additives at this ratio minimizes side reactions of an additive on an electrode.

With respect to the mass ratio of a compound represented by formula (I) above to an oxalate (in the case of two or more kinds, the total amount), the compound represented by formula (I) to the oxalate is usually 1/100 or more, preferably 10/100 or more, more preferably 20/100 or more, further preferably 25/100 or more, and usually 10,000/100, preferably 500/100 or less, more preferably 100/100, particularly preferably 80/100 or less, and most preferably 40/100 or less. When the mass ratio is in this range, nonaqueous electrolytic solution secondary battery characteristics, especially durability characteristics or continuous charging characteristics, can be considerably improved. Although the principle behind this is not known, it is believed that this is because mixing additives at this ratio minimizes side reactions of an additive on an electrode.

When LiPF₆ is contained in a nonaqueous electrolytic solution, the mass ratio (oxalate / LiPF₆) of an oxalate (in the case of two or more kinds, the total amount) to the content of LiPF₆ is usually 0.00005 or more, preferably 0.001 or more, more preferably 0.01 or more, further preferably 0.02 or more, particularly preferably 0.025 or more, usually 1.0 or less, preferably 0.5 or less, more preferably 0.4 or less, and further preferably 0.35 or less. When the mass ratio is in this range, nonaqueous electrolytic solution secondary battery characteristics, especially durability characteristics or continuous charging characteristics, can be considerably improved. Although the principle behind this is not known, it is believed that mixing LiPF₆ at this ratio minimizes decomposition side reaction of LiPF₆ in a nonaqueous electrolytic solution secondary battery.

The content of an additive listed above is determined by magnetic resonance spectroscopy.

Some additives are listed as salts as electrolytes, in which case discrimination is based on the concentration range. For example, when a fluorinated inorganic salt is contained at 10% by mass in a nonaqueous electrolytic solution, the salt is considered to be an electrolyte, and when a salt having an oxalic acid skeleton is contained at 0.5% by mass, the salt is considered to be an additive.

### [B1-2. Electrolyte]

An electrolyte can be the same as in the first embodiment, and may include an electrolyte (C), which is an electrolyte other than the above-described compound Y among these. When these electrolytes (C) are contained, the mass ratio (C)/(X) of the electrolyte (C) to a compound (X) is preferably 2 or more, more preferably 3 or more, further preferably 4 or more, and particularly preferably 5 or more. The mass ratio is preferably 10,000 or less, preferably 2,000 or less, further preferably 1,000 or less, and particularly preferably 200 or less. When (C)/(X) is in the above-described range, a compound (X) acts appropriately on an electrode to sufficiently suppress self-discharge and synergistically improve the capacity maintenance rate at high temperature storage and the discharge characteristic maintenance performance at low temperatures.

### [B1-3. Nonaqueous Solvent]

A nonaqueous solvent can be the same as in the first embodiment.

### [B1-4. Additive]

A nonaqueous electrolytic solution may contain a variety of additives (hereinafter, also referred to as "combination additive") to the extent that an effect of the present invention is not considerably impaired. As the additive, any conventionally known additive may be used. The additives may be used singly, or two or more kinds thereof may be used together in any combination and ratio.

Examples of a conventionally known additive that can be contained in a nonaqueous electrolytic solution include a cyclic carbonate containing a carbon-carbon unsaturated bond, a fluorine-containing cyclic carbonate, a compound containing an isocyanate group, a compound having an isocyanurate skeleton, a phosphorus-containing organic compound, an organic compound containing a cyano group, a silicon-containing compound, an aromatic compound, a fluorine-free carboxylic ester, a cyclic compound containing a plurality of ether bonds, a compound having an isocyanurate skeleton, a borate. Examples thereof include compounds described in WO 2015/111676.

Additives may be used singly or in combination of two or more kinds thereof in any combination and ratio. The content of an additive (total amount in the case of two or more additives), in 100% by mass of a nonaqueous electrolytic solution, can be 0.001% by mass or more, preferably 0.01% by mass or more, and more preferably 0.1% by mass or more, and can be 10% by mass or less, preferably 5% by mass or less, and more preferably 3% by mass or less. When the content of an additive is within this range, the characteristics of a nonaqueous electrolytic solution secondary battery, especially the durability or continuous charging characteristics, can be considerably improved. Although the principle behind this is not known, it is believed that this is because mixing additives at this ratio minimizes side reactions of an additive on an electrode.

With respect to the mass ratio of a compound represented by formula (I) and/or (II) above to an additive (in the case of two or more kinds, the total amount), the compound represented by formula (I) and/or (II) to the additive is usually 1/100 or more, preferably 10/100 or more, more preferably 20/100 or more, further preferably 25/100 or more, and usually 10,000/100, preferably 500/100 or less, more preferably 100/100 or less, particularly preferably 80/100 or less, and most preferably 40/100 or less. When the mass ratio is in this range, nonaqueous electrolytic solution secondary battery characteristics, especially durability characteristics or storage characteristics, can be considerably improved. Although the principle behind this is not known, it is believed that this is because mixing additives at this ratio minimizes side reactions of an additive on an electrode.

When LiPF₆ is contained in a nonaqueous electrolytic solution, the mass ratio of an additive (in the case of two or more kinds, the total amount) to the content of LiPF₆ is usually 0.00005 or more, preferably 0.001 or more, more preferably 0.01 or more, further preferably 0.02 or more, particularly preferably 0.025 or more, usually 1.0 or less, preferably 0.5 or less, more preferably 0.4 or less, and further preferably 0.35 or less. When the mass ratio is in this range, nonaqueous electrolytic solution secondary battery characteristics, especially durability characteristics or continuous charging characteristics, can be considerably improved. Although the principle behind this is not known, it is believed that mixing LiPF₆ at this ratio minimizes decomposition side reaction of LiPF₆ in a nonaqueous electrolytic solution secondary battery.

### [B2. Nonaqueous Electrolytic Solution Secondary Battery]

The nonaqueous electrolytic solution secondary battery of the present invention is a nonaqueous electrolytic solution secondary battery including a positive electrode containing a positive electrode active material capable of absorbing and releasing a metal ion, and a negative electrode containing a negative electrode active material capable of absorbing and releasing a metal ion.

### [B2-1. Nonaqueous Electrolytic Solution]

A nonaqueous electrolytic solution can be the same as in the first embodiment.

### [B2-2. Negative Electrode]

A negative electrode can be the same as in the first embodiment.

### [B2-3. Positive Electrode]

A positive electrode refers to one in which a positive electrode active material is at least partially present on the surface of a current collector.

### [B2-3-1. Positive Electrode Active Material]

In the embodiment of the present invention, a positive electrode active material used for a positive electrode is not particularly restricted, and preferably contains a lithium transition metal compound.

Lithium transition metal compounds are compounds having a structure capable of desorbing and inserting lithium ions, and examples thereof include a sulfide, a phosphate compound, a silicate compound, a boric acid compound, and a lithium transition metal composite oxide. Among these, a lithium transition metal composite oxide is preferable.

Examples of a lithium transition metal composite oxide include one belonging to a spinel structure, which allows three-dimensional diffusion, and one belonging to a layered structure, which allows two-dimensional diffusion of a lithium ion. One having a spinel structure is generally represented as LiₓM'₂O₄ (where M' is at least one or more transition metals), and specific examples thereof include LiMn₂O₄, LiCoMnO₄, LiNi_{0.5}Mn_{1.5}O₄, and LiCoVO₄. One having a layered structure is generally represented as LiₓMO₂ (M is at least one or more transition metals). Specific examples thereof include LiCoO₂, LiNiO₂, LiNi_{0.85}Co_{0.10}Al_{0.05}O₂, LiNi_{0.80}Co_{0.15}Al_{0.05}O₂, LiNi_{0.33}Co_{0.33}Mn_{0.33}O₂, Li_{1.05}Ni_{0.33}Mn_{0.33}Co_{0.33}O₂, LiNi_{0.5}Co_{0.2}Mn_{0.3}O₂, Li_{1.05}Ni_{0.50}Mn_{0.29}Co_{0.21}O₂, LiNi_{0.6}Co_{0.2}Mn_{0.2}O₂, and LiNi_{0.8}Co_{0.1}Mn_{0.1}O₂.

Among others, a positive electrode active material preferably contains a lithium transition metal compound represented by the following composition formula (IV).

Li₁₊ₓMO₂ ··· (IV)

In the composition formula (IV), x is from -0.1 to 0.5. Among them, the lower limit of x is preferably -0.05 or more, more preferably -0.03 or more, particularly preferable -0.02 or more, and most preferably -0.01 or more. The upper limit value of x may be 0.1 or less, and is preferably 0.06 or less, more preferably 0.028 or less, further preferably 0.020 or less, particularly preferable 0.010 or less, and most preferably 0.005 or less. When x is in the above-described range, effects of suppression of self-discharge, suppression of swelling, reduction of internal resistance, and reduction of capacity loss during contact charging due to a combination with compounds represented by formula (I) and/or (II) contained in an electrolytic solution are more likely to be sufficiently exhibited, which is preferable.

In the composition formula (IV), M is a plurality of elements including at least Ni, and may also contain Co and Mn, and preferably contains Mn. The Ni/M molar ratio is from 0.40 to 1.0. The Ni/M molar ratio is from 0.2 to 1.0. The lower limit of the molar ratio is 0.30 or more, more preferably 0.40 or more, more preferably 0.45 or more, more preferably 0.55 or more, more preferably 0.65 or more, and more preferably 0.75 or more. The upper limit of the molar ratio may be 0.95 or less, preferably 0.85 or less, and more preferably 0.80 or less.

When the Ni/M molar ratio is in the above-described range, the ratio of Ni involved in charging and discharging is sufficiently large, and a battery has a high capacity, which is preferable.

When M contains Co, the Co/M molar ratio in the composition formula (IV) is not particularly limited, and is preferably 0.05 or more, more preferably 0.08 or more, and further preferably 0.10 or more. The ratio is preferably 0.35 or less, more preferably 0.30 or less, further preferably 0.25 or less, particularly preferably 0.20 or less, and most preferably 0.15 or less. When the Co/M molar ratio is in the above-described range, the charge/discharge capacity is preferable since the charge/discharge capacity is large.

When M contains Mn, the Mn/M molar ratio is not particularly limited, and is 0 or more, and is preferably 0.05 or more, more preferably 0.08 or more, and further preferably 0.10 or more. The ratio may be 0.35 or less, and is preferably 0.30 or less, more preferably 0.25 or less, further preferably 0.20 or less, and particularly preferably 0.15 or less.

When the above-described Mn/M molar ratio is in the above-described range, the ratio of Mn not involved in charging/discharging becomes sufficiently small, which is preferable since a battery will have a high capacity.

Among others, a lithium transition metal composite oxide having a layered structure is preferable, and a transition metal oxide represented by the composition formula (V) below is more preferable.

Liₐ₁Ni_{b1}Co_{c1}M_{d1}O₂ ··· (V)

In the composition formula (V), a1, b1, c1, and d1 represent numerical values satisfying 0.90 ≤ a1 ≤ 1.10, 0.40 ≤ b1 ≤ 0.98, 0.01 ≤ c1 ≤ 0.5, and 0.00 ≤ d1 ≤ 0.50, respectively, and 0.50 ≤ b1 + c1 and b1 + c1 + d1 = 1 is satisfied. M represents at least one kind of element selected from the group consisting of Mn, Al, Mg, Zr, Fe, Ti, and Er.

In the composition formula (V), a value of 0.01 ≤ d1 ≤ 0.50 is preferable.

In particular, a transition metal oxide represented by the composition formula (2) below is preferable.

Liₐ₂Ni_{b2}Co_{c2}M_{d2}O₂ ··· (VI)

In the formula (VI), a2, b2, c2, and d2 represent numerical values satisfying 0.90 ≤ a2 ≤ 1.10, 0.60 ≤ b2 ≤ 0.98, 0.01 ≤ c2 < 0.50, 0.01 ≤ d2 < 0.50, respectively, and b2 + c2 + d2 = 1 is satisfied. M represents at least one element selected from the group consisting of Mn, Al, Mg, Zr, Fe, Ti, and Er.

Suitable specific examples of a lithium transition metal oxide represented by the composition formula (VI) include LiNi_{0.85}Co_{0.10}Al_{0.05}O₂, LiNi_{0.80}Co_{0.15}Al_{0.05}O₂, LiNi_{0.5}Co_{0.2}Mn_{0.3}O₂, Li_{1.05}Ni_{0.50}Co_{0.20}Mn_{0.30}O₂, LiNi_{0.6}Co_{0.2}Mn_{0.2}O₂, and LiNi_{0.8}Co_{0.1}Mn_{0.1}O₂.

In each of the above-described composition formulas, M preferably contains Mn or Al, more preferably contains Mn, and further preferably contains Mn or Al. This is because the structural stability of a lithium transition metal oxide is increased and structural degradation is suppressed after repeated charging and discharging.

### [B2-3-1-1. Introduction of Different Element]

A lithium transition metal compound may introduce a different element other than those prescribed in the above-described composition formula (IV).

### [B2-3-1-2. Surface Coating]

A substance (surface-attached substance) with a composition different from this may be attached to the surface of the above-described positive electrode active material. Examples of the surface-attached substance include an oxide such as aluminum oxide, a sulfate such as lithium sulfate, and a carbonate such as lithium carbonate, and carbonate is preferable since the carbonate improves the affinity of a compound represented by the above-described formulas (II) and (III) and a positive electrode.

These surface-attached substances can be attached to the surface of a positive electrode active material by, for example, dissolving or suspending the substance in a solvent, impregnating and adding the solution or suspension to the positive electrode active material, and then drying the solvent.

The lower limit of the amount of a surface-attached substance with respect to the positive electrode active material by mass is preferably 1 µmol/g or more, preferably 10 µmol/g or more, more preferably 15 µmol/g or more, further preferably 20 µmol/g or more, and the substance is usually used in an amount of 1 mmol/g or less.

Herein, one in which a substance of a different composition is attached to the surface of a positive electrode active material is also referred to as a "positive electrode active material".

### [B2-3-1-3. Blend]

These positive electrode active materials may be used singly, or two or more kinds thereof may be used together in any combination and ratio.

### [B2-3-2. Configuration and Manufacturing Method of Positive Electrode]

The configuration of a positive electrode will be described below.
In the present embodiment, a positive electrode can be manufactured by forming a positive electrode active material layer containing a positive electrode active material and a binding agent on a current collector. Production of a positive electrode using a positive electrode active material can be performed by a conventional method. In other words, a positive electrode can be obtained by forming a positive electrode active material layer on a current collector either by dry mixing a positive electrode active material, a binding agent, and, if necessary, a conductive material and a thickener, and the like in a sheet form and pressing the sheet onto a positive electrode current collector or by dissolving or dispersing these materials in a liquid medium to make a slurry, applying the slurry to a positive electrode current collector, and drying the slurry. For example, the above-described positive electrode active material may be roll-formed into a sheet electrode or compression-molded into a pellet electrode.

Hereafter, the case of applying and drying a slurry to a positive electrode current collector will be described.

### [B2-3-2-1. Active Material Content]

The content of a positive electrode active material in a positive electrode active material layer is usually from 80% by mass to 98% by mass.

### [B2-3-2-2. Density of Positive Electrode Active Material Layer]

A positive electrode active material layer obtained by applying and drying is preferably compacted by hand press, roller press, or the like to increase the packing density of a positive electrode active material. The density of a positive electrode active material layer is usually 1.5 g/cm³ or more, preferably 3.0 g/cm³ or more, further preferably 3.3 g/cm³ or more, and usually 3.8 g/cm³ or less.

### [B2-3-2-3. Conductive Material]

Any known conductive material can be used as a conductive material. Specific examples thereof include a metal material such as copper or nickel. These may be used singly, or two or more kinds thereof may be used together in any combination and ratio. A conductive material is used in a positive electrode active material layer in such a manner that the conductive material usually contains from 0.01% by mass to 50% by mass.

### [B2-3-2-4. Binding Agent]

A binding agent used in production of a positive electrode active material layer is not particularly limited, and in the case of a coating method, the type of a binding agent is not particularly restricted as long as the material is dissolved or dispersed in a liquid medium used during electrode production, and from the viewpoint of weather resistance, chemical resistance, heat resistance, flame resistance, and the like, a fluorinated resin such as polyvinyl fluoride, polyvinylidene fluoride, or polytetrafluoroethylene; a CN group-containing polymer such as polyacrylonitrile or polyvinylidene cyanide, or the like is preferable.

A mixture, a modification, a derivative, a random copolymer, an alternating copolymer, a graft copolymer, a block copolymer, or the like of the above-described polymers and the like may also be used. Binding agents may be used singly, or two or more kinds thereof may be used in any combination and ratio.

When a resin is used as a binding agent, the weight average molecular weight of the resin is any amount as long as such a weight does not considerably impair an effect of the present invention, and is usually from 10,000 and 3,000,000. When the molecular weight is in this range, the strength of an electrode is improved, and the electrode can be formed suitably.

The ratio of a binding agent in a positive electrode active material layer is usually from 0.1% by mass to 80% by mass.

### [B2-3-2-5. Solvent]

The type of a solvent used to form a slurry is not particularly restricted, as long as the solvent is capable of dissolving or dispersing a positive electrode active material, a conductive material, a binding agent, and if necessary, a thickener, and either an aqueous solvent or an organic solvent can be used.

### [B2-3-2-6. Current Collector]

The material of a positive electrode current collector is not particularly restricted, and any known material can be used. Specific examples thereof include a metal material such as aluminum, stainless steel, nickel plating, titanium, or tantalum. Among these, aluminum is preferable.

Examples of the shape of a current collector include a metal foil, a metal cylinder, a metal coil, a metal plate, a metal thin film, an expanded metal, a punched metal, and a foamed metal. Among these, a metal thin film is preferable. A thin film may be formed into a mesh as appropriate.

### [B2-3-2-7. Thickness of Positive Electrode Plate]

The thickness of a positive electrode plate is not particularly restricted, and from the viewpoint of high capacity and high output, the thickness of a composite layer, after subtracting the thickness of a metal foil of a core material, is usually from 10 um to 500 um for one side of a current collector.

### [B2-3-2-7. Surface Coating of Positive Electrode Plate]

One with a substance of a different composition adhered to the surface of the above-described positive electrode plate may also be used, and the same substance as the above-described surface-attached substance is used.

### [B2-4. Separator]

A separator can be the same as in the first embodiment.

### [B2-5. Battery Design]

A battery design can be the same as in the first embodiment.

### Examples

### [Experiment A1]

Specific aspects of the present invention will now be described in more detail by means of Examples, but the present invention is not limited by these Examples.

Compounds A1 to A11 and combination additives used in the present Examples are listed below.

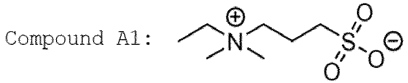

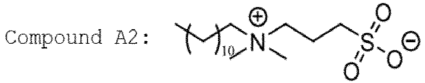

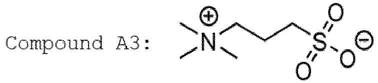

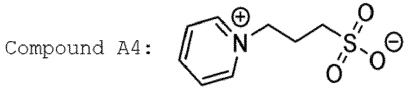

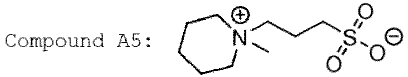

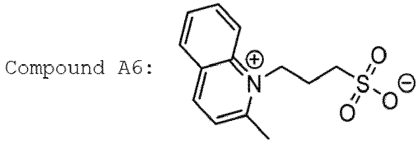

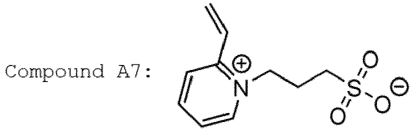

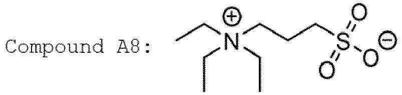

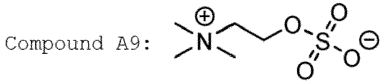

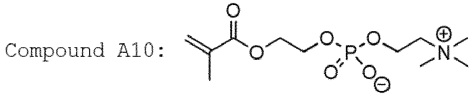

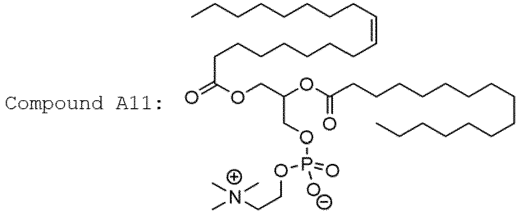

(Below are combination additives)
Lithium difluorophosphate (F₂PO₂Li)
Lithium bis(fluorosulfonyl)imide, (LiFSI)
Lithium fluorosulfonate, (FSO₃Li)
Lithium bisoxalate borate (LiBOB)
1,2-Ethylene sulfate, (ESA)
Ethyl methanesulfonate, (EMS)
1,3-Propanesultone (PS)
Methylene methane disulfonate (MMDS)

### [Examples A2 to A11, Comparative Examples A2 to A11]

### [Manufacturing of Nonaqueous Electrolytic Solution Secondary Battery]

### < Preparation of Nonaqueous Electrolytic Solution >

A nonaqueous electrolytic solution was prepared by dissolving 1.2 mol/L (as the concentration in the nonaqueous electrolytic solution) of well-dried LiPF₆ in a mixture of ethylene carbonate, ethyl methyl carbonate, and dimethyl carbonate (volume ratio 3:4:3) under a dry argon atmosphere and further dissolving additives in the combinations listed in Table A1, with a nonaqueous electrolytic solution obtained by dissolving 1% by mass of vinylene carbonate as the standard.

Using this nonaqueous electrolytic solution, a nonaqueous electrolytic solution secondary battery was manufactured by the following method, and the above-described evaluation was carried out.

### < Manufacturing of Positive Electrode 1 >

94 parts by mass of Li_{1.00}Ni_{0.61}Mn_{0.19}Co_{0.20}O₂ (Ni/M molar ratio = 0.61, carbonate concentration 91 µmol/g) as a positive electrode active material, 3 parts by mass of acetylene black as a conductive material, and 3 parts by mass of polyvinylidene fluoride (PVdF) as a binding agent were mixed and slurried in *N*-methyl-2-pyrrolidone, and the slurry was uniformly applied to a 15 um thick aluminum foil, dried, and roll-pressed to form a positive electrode (this positive electrode is sometimes referred to as a positive electrode 1). The electrode plate density of the positive electrode was 3.3 g/cm³.

### < Manufacturing of Positive Electrode 2 >

A positive electrode 2 was made in the same manner as positive electrode 1, using 90 parts by mass of Li_{1.05}Ni_{0.52}Mn_{0.29}Co_{0.20}O₂ (Ni/M molar ratio = 0.52, carbonate concentration 16 µmol/g) as the positive electrode active material, 7 parts by mass of acetylene black as the conductive material, and 3 parts by mass of polyvinylidene fluoride (PVdF) as the binding agent. The electrode plate density of the positive electrode 2 was 3.3 g/cm³.

### < Manufacturing of Positive Electrode 3 >

A positive electrode 3 was made in the same manner as the positive electrode 1, using 85 parts by mass of Li_{1.05}Ni_{0.34}Mn_{0.33}Co_{0.33}O₂ (Ni/M molar ratio = 0.34, carbonate concentration 12 µmol/g) as the positive electrode active material, 10 parts by mass of acetylene black as the conductive material, and 5 parts by mass of polyvinylidene fluoride (PVdF) as the binding agent. The electrode plate density of a positive electrode 3 was 2.6 g/cm³.

### < Manufacturing of Positive Electrode 4 >

A positive electrode 4 was made in the same manner as the positive electrode 1, using 97 parts by mass of LiCoO₂ (Ni/M molar ratio = 0, carbonate concentration 6 µmοl/g) as the positive electrode active material, 1.5 parts by mass of acetylene black as the conductive material, and 1.5 parts by mass of polyvinylidene fluoride (PVdF) as the binding agent. The electrode plate density of a positive electrode 4 was 3.6 g/cm³.

### < Manufacturing of Negative Electrode >

To 49 parts by mass of graphite powder, 50 parts by mass of an aqueous dispersion of sodium carboxymethylcellulose (the concentration of sodium carboxymethylcellulose is 1% by mass) as a thickener, and 1 part by mass of aqueous dispersion of styrene-butadiene rubber (concentration of styrene-butadiene rubber 50% by mass) as a binder were added and mixed by a disperser to make a slurry. The resulting slurry was uniformly applied to a 10 um thick copper foil, dried, and roll pressed to make a negative electrode.

### < Production of Nonaqueous Electrolytic Solution Secondary Battery >

The above-described positive electrode, negative electrode, and polyolefin separator were layered in the order of negative electrode, separator, and positive electrode. The thus obtained battery elements were wrapped in aluminum laminate film, filled with the above-described nonaqueous electrolytic solution, and then vacuum-sealed to manufacture a sheet nonaqueous electrolytic solution secondary battery. Nonaqueous electrolytic solution secondary batteries of Examples A2 to A11 and Comparative Examples A2 to A11 were manufactured using the electrolytic solutions listed in Table A1.

### [Table 1]

**Table A1**

| Electrolytic solution composition | Additive 1 | Content (mass %) | Additive 2 | Content (mass %) |
|---|---|---|---|---|
| A1-1 | Compound A1 | 0.2 | - | - |
| A1-2 | Compound A1 | 0.5 | - | - |
| A1-3 | Compound A1 | 0.8 | - | - |
| A2-1 | Compound A2 | 0.2 | - | - |
| A3-1 | Compound A3 | 0.2 | - | - |
| A4-1 | Compound A4 | 0.2 | - | - |
| A4-2 | Compound A4 | 0.3 | - | - |
| A4-3 | Compound A4 | 0.5 | | |
| A4-4 | Compound A4 | 1 | - | - |
| A4-5 | Compound A4 | 1.5 | - | - |
| A5-1 | Compound A5 | 0.2 | - | - |
| A6-1 | Compound A6 | 0.2 | - | - |
| A7-1 | Compound A7 | 0.2 | - | - |
| A8-1 | Compound A8 | 0.2 | - | - |
| A9-1 | Compound A9 | 0.5 | - | - |
| A10-1 | Compound A10 | 0.2 | | - |
| A11-1 | Compound A11 | 0.2 | | - |
| A1-11 | Compound A1 | 0.2 | F₂PO₂Li | 1 |
| A1-12 | Compound A1 | 0.2 | LiFSI | 0.5 |
| A1-13 | Compound A1 | 0.2 | LiFSI | 7.4 |
| A1-14 | Compound A1 | 0.2 | FSO₃Li | 0.5 |
| A1-15 | Compound A1 | 0.2 | ESA | 1 |
| A1-16 | Compound A1 | 0.2 | EMS | 0.5 |
| A1-17 | Compound A1 | 0.2 | MMDS | 0.5 |
| A1-18 | Compound A1 | 0.8 | PS | 0.5 |
| A1-19 | Compound A1 | 0.8 | MMDS | 1 |
| A1-20 | Compound A1 | 0.2 | F₂PO₂Li | 1 |
| | | | FSO₃Li | |
| A1-21 | Compound A1 | 0.2 | F₂PO₂Li | 1 |
| | | | ESA | |
| A1-22 | Compound A1 | 0.2 | F₂PO₂Li | 1 |
| | | | EMS | |
| A3-11 | Compound A3 | 0.2 | F₂PO₂Li | 1 |
| A4-11 | Compound A4 | 0.3 | F₂PO₂Li | 0.5 |
| A4-12 | Compound A4 | 0.3 | LiBOB | 0.5 |
| A4-13 | Compound A4 | 0.3 | F₂PO₂Li | 0.5 |
| | | | FSO₃Li | |
| A21-1 | - | - | F₂PO₂Li | 0.5 |
| A21-2 | - | - | F₂PO₂Li | 1 |
| A21-3 | - | - | F₂PO₂Li | 0.5 |
| | | | FSO₃Li | |
| A22-1 | - | - | LiFSI | 0.5 |
| A22-1 | - | - | LiFSI | 0.5 |
| A24-1 | - | - | LiBOB | 0.5 |
| A31-1 | - | - | - | - |

### [Evaluation of Nonaqueous Electrolytic Solution Secondary Battery]

The nonaqueous electrolytic solution secondary batteries manufactured in Examples were evaluated as follows.

### · Initial Charge/discharge

In a thermostat bath at 25°C, a sheet nonaqueous electrolytic solution secondary battery was charged at 0.05C (The current value at which the rated capacity is discharged in 1 hour by the discharge capacity at the 1-hour rate is 1C. The same applies hereafter.) with a constant current to 3.7 V, followed by a constant current-constant voltage charge at 0.2 C to 4.2 V, and then a constant current discharge at 0.2 C to 2.5 V.

Furthermore, the nonaqueous electrolytic solution secondary battery was stabilized by storing the battery at 60°C for 24 hours after constant-current-constant-voltage charging at 0.2 C to 4.1 V. The battery was then discharged at a constant current to 2.5 V at 25°C, followed by a constant-current-constant-voltage charge at 0.2 C to a voltage of 4.2 V. A constant-current discharge was then carried out at 0.2C to 2.5V, and the initial capacity (A) was defined as the discharge capacity at this time.

Then, at 25°C, a constant-current-constant-voltage charge was performed at 0.2 C up to a voltage of 3.7 V. This was discharged at 0.05 C, 0.1 C, 0.25 C, 0.5 C, 0.75 C, and 1 C at -20°C, respectively, and the voltage at 10 seconds was measured. The internal resistance was determined from the current-voltage line and was used as the initial resistance (R1) .

Next, a constant-current-constant-voltage charge was performed at 0.2 C to a voltage of 4.2 V to complete the initial charge and discharge.

### · Evaluation of Swelling, Self-discharge, and Increased Internal Resistance

The nonaqueous electrolytic solution secondary battery after the initial charge-discharge described above was left at 60°C for 14 days. At this time, the volume of the nonaqueous electrolytic solution secondary battery was immersed in an ethanol bath at room temperature before and after the battery was left in the bath and the volume was measured, and the change in volume during the battery was defined as "swelling" of the battery, and the percentage of swelling reduction by an additive was defined as "swelling inhibition ratio" (For example, swelling inhibition rate of Example 1 (%) = {(swelling of Comparative Example 1 - swelling of Example 1) / swelling of Comparative Example 1} × 100).

The discharge capacity of the nonaqueous electrolytic solution secondary battery when the battery was discharged at a constant current up to 2.5 V at 0.2 C in a thermostat bath at 25°C was defined as the leftover capacity (B), and the ratio ((A - B) / A × 100) of the difference between the initial capacity (A) and the leftover capacity (B) was defined as the "self-discharge rate".

Then, at 25°C, a constant-current-constant-voltage charge was performed at 0.2 C up to a voltage of 3.7 V. This was discharged at 0.05 C, 0.1 C, 0.25 C, 0.5 C, 0.75 C, and 1 C at -20°C, respectively, and the voltage at 10 seconds was measured. The internal resistance was obtained from this current-voltage line, and defined as the resistance after leaving (R2), and the rate [(R2 - R1) / R1 × 100 - 100] of change between R1 and R2 was defined as the "internal resistance increase rate". The ratio of the amount of reduction in the internal resistance increase rate due to an additive was defined as the "internal resistance increase suppression ratio" (For example, the internal resistance increase suppression ratio of Example 1 (%) = {(internal resistance increase rate of Comparative Example 1-internal resistance increase rate of Example 1) / internal resistance increase rate of Comparative Example 1} × 100).

It can be said that the smaller the swelling, self-discharge rate, and internal resistance increase rate are, the more preferable, and the larger the swelling inhibition ratio and internal resistance increase suppression ratio are, the more preferable.

### · Evaluation of Continuous Charge Capacity Loss Rate

A nonaqueous electrolytic solution secondary battery that was initially charged and discharged by changing the conditions of the above-described initial charge and discharge from 4.2 V to 4.3 V was charged to a constant voltage of 4.3 V for 7 days at 60°C. The amount of electricity that flowed during the constant-voltage charge was defined as continuous charge capacity loss (C), and the ratio (C/A) to the initial capacity (A) was defined as "continuous charge capacity loss rate. The ratio of the amount of reduction in the continuous charge capacity loss rate due to the additive was defined as the "continuous charge capacity loss suppression rate" (For example, the continuous charge capacity loss suppression rate of Example 1 (%) = {(continuous charge capacity loss rate of Comparative Example 1 - continuous charge capacity loss rate of Example 1) / continuous charge capacity loss rate of Comparative Example 1} × 100).

It can be said that the smaller the continuous charge capacity loss rate is, the more preferable, and the larger the value is, the more preferable the continuous charge capacity loss suppression rate.

Table A2 shows the internal resistance increase rate and swelling of Examples A2-1 to A2-15 and Comparative Examples A2-1 to A2-3 in which the positive electrode 1 is the same and electrolytic solutions of various compositions are used.

Table A3 shows the internal resistance suppression ratio of Examples A3-1 to A3-2 and Comparative Examples A3-1 to A3-2 using positive electrodes 1 to 4 with the same electrolytic solution composition.

Table A4 shows the swelling inhibition ratio of Examples A4-1 and Comparative Examples A4-1 to A4-2 using positive electrodes 1, 3 and 4 with the same electrolytic solution composition.

Table A5 shows swelling of Examples A5-1 to A5-3 and Comparative Example A5-1 in which the positive electrode 1 is the same and electrolytic solutions of various compositions are used.

As shown in Table A2, when Compounds A1 to A7 are contained in a nonaqueous electrolytic solution of a nonaqueous electrolytic solution secondary battery containing a positive electrode active material of a specific composition (Examples A2-1 to A2-8), the internal resistance increase rate and swelling are suppressed compared to a case in which Compounds A1 to A7 are not contained (Comparative Example A2-1). On the other hand, the electrolytic solution containing Compound A11 (Comparative Example A2-2) used in the conventional technique (Patent Document 2) tends to have a large internal resistance increase and swelling.

When lithium difluorophosphate (F₂PO₂Li), 1,2-ethylene sulfate (ESA), or methylene methane disulfonate (MMDS) is contained, the internal resistance increase and swelling are suppressed at a high level by containing Compounds A1 or A3 (Examples A2-9 to A2-12). Furthermore, when a fluorophosphate containing a P=O bond is combined with lithium fluorosulfonate, ethyl methanesulfonate (EMS), or 1,2-ethylene sulfate (ESA), increase in internal resistance is suppressed at an even higher level by containing Compound A1 (Examples A2-13 to A2-15) .

As shown in Table A3, an internal resistance increase suppression effect of Compound A4 is exhibited in nonaqueous electrolytic solution secondary batteries (Examples A3-1 and A3-2) using positive electrodes 1 and 2 containing a positive electrode active material of a specific composition. On the other hand, non-aqueous electrolytic solution secondary batteries (Comparative Examples A3-3 and A3-4) using positive electrodes 3 and 4 containing a positive electrode active material having no specific composition had a small internal resistance increase suppression effect of Compound A4, and was inferior.

As shown in Table A4, a swelling suppression effect of Compound A4 is exhibited in nonaqueous electrolytic solution secondary batteries (Example A4-1) using the positive electrode 1 containing a positive electrode active material with a specific composition. On the other hand, in nonaqueous electrolytic solution secondary batteries (Comparative Examples A4-2 and A4-3) using positive electrodes 3 and 4 containing positive electrode active materials that do not have a specific composition, no swelling suppression effect by Compound A4 was observed.

As Table A5 shows, regardless of the structure of an SOn betaine compound contained in a nonaqueous electrolytic solution, a swelling suppression effect is observed in nonaqueous electrolytic solution secondary batteries (Examples A5-1 to A5-3) using the positive electrode 1 containing a positive electrode active material with a specific composition.

### [Table 2]

**Table A2**

| | Positive electrode | Electrolytic solution composition | Internal resistance increase rate (%) | Swelling (relative value) |
|---|---|---|---|---|
| Examples A2-1 | positive electrode 1 | A1-1 | 27 | 46 |
| Examples A2-2 | positive electrode 1 | A1-3 | 31 | 32 |
| Examples A2-3 | positive electrode 1 | A2-1 | 25 | 59 |
| Examples A2-4 | positive electrode 1 | A3-1 | 26 | 47 |
| Examples A2-5 | positive electrode 1 | A4-1 | 18 | 75 |
| Examples A2-6 | positive electrode 1 | A5-1 | 18 | 60 |
| Examples A2-7 | positive electrode 1 | A6-1 | 16 | 89 |
| Examples A2-8 | positive electrode 1 | A7-1 | 14 | 83 |
| Examples A2-9 | positive electrode 1 | A1-11 | 19 | 28 |
| Examples A2-10 | positive electrode 1 | A3-11 | 18 | 27 |
| Examples A2-11 | positive electrode 1 | A1-15 | 12 | 20 |
| Examples A2-12 | positive electrode 1 | A1-19 | 4 | 28 |
| Examples A2-13 | positive electrode 1 | A1-20 | -3 | 25 |
| Examples A2-14 | positive electrode | A1-21 | 1 | 10 |
| Examples A2-15 | positive electrode | A1-22 | -8 | 27 |
| Comparative Example A2-1 | positive electrode 1 | A31-1 | 37 | 100 |
| Comparative Example A2-2 | positive electrode 1 | A11-1 | 33 | 97 |
| Comparative Example A2-3 | positive electrode 1 | A21-2 | 26 | 28 |

### [Table 3]

**Table A3**

| | Positive electrode | Electrolytic solution composition | Internal resistance increase suppression ratio |
|---|---|---|---|
| Examples A3-1 | positive electrode 1 | A4-1 | 51 |
| Examples A3-2 | positive electrode 2 | A4-1 | 27 |
| Comparative Example A3-1 | positive electrode 3 | A4-1 | -27 |
| Comparative Example A3-2 | positive electrode 4 | A4-1 | 3 |

### [Table 4]

**Table A4**

| | Positive electrode | Electrolytic solution composition | Swelling suppression rate |
|---|---|---|---|
| Examples A4-1 | positive electrode | A4-1 | 25 |
| Comparative Example A4-1 | positive electrode 3 | A4-1 | -17 |
| Comparative Example A4-2 | positive electrode 4 | A4-1 | -360 |

### [Table 5]

**Table A5**

| | Positive electrode | Electrolytic solution composition | Swelling (relative value) |
|---|---|---|---|
| Examples A5-1 | positive electrode 1 | A1-2 | 76 |
| Examples A5-2 | positive electrode | A4-3 | 80 |
| Examples A5-3 | positive electrode 1 | A9-1 | 93 |
| Comparative Example A5-1 | positive electrode 1 | A31-1 | 100 |

Table A6 shows the self-discharge rate (relative value with Comparative Example A6-1 as 100) for Examples A6-1 to A6-4 and Comparative Examples A6-1 to A6-8. As shown in Table A6, when Compounds A1 to A4 are contained in a nonaqueous electrolytic solution of a nonaqueous electrolytic secondary battery containing a positive electrode active material of a specific composition (Examples A6-1 to A6-4), the self-discharge rate is improved compared to when Compounds A1 to A4 are not included and when a nonaqueous electrolytic solution secondary battery containing a positive electrode active material that does not have a specific composition. On the other hand, electrolytic solutions containing Compound A10 or A11 (Comparative Examples A6-2 and A6-3), which are used in the conventional technique (Patent Document 2), have a larger self-discharge rate and worse than those without them (Comparative Example A6-1). In nonaqueous electrolytic solution secondary batteries containing a positive electrode active material without a specific composition, no improvement in self-discharge rate was observed even when Compound A4 was contained in the nonaqueous electrolytic solution (Comparative Examples A6-5 to A6-8).

### [Table 6]

**Table A6**

| | Positive electrode | Electrolytic solution composition | Self-discharge rate (relative value) |
|---|---|---|---|
| Examples A6-1 | positive electrode 1 | A1-1 | 93 |
| Examples A6-2 | positive electrode 1 | A2-1 | 86 |
| Examples A6-3 | positive electrode 1 | A3-1 | 89 |
| Examples A6-4 | positive electrode 1 | A4-1 | 94 |
| Comparative Example A6-1 | positive electrode 1 | A31-1 | 100 |
| Comparative Example A6-2 | positive electrode 1 | A10-1 | 103 |
| Comparative Example A6-3 | positive electrode 1 | A11-1 | 111 |
| Comparative Example A6-4 | positive electrode 2 | A31-1 | 122 |
| Comparative Example A6-5 | positive electrode 3 | A4-1 | 208 |
| Comparative Example A6-6 | positive electrode 3 | A31-1 | 207 |
| Comparative Example A6-7 | positive electrode 4 | A4-1 | 205 |
| Comparative Example A6-8 | positive electrode 4 | A31-1 | 204 |

Table A7 shows the continuous charge capacity loss rate for Examples A7-1 to A7-5 and Comparative Examples A7-1 to A7-8.

Table A8 shows the continuous charge capacity loss rate for Examples A8-1 to A8-2 and Comparative Examples A8-1 to A8-3 using positive electrodes 1, 3 and 4.

Table A9 shows the continuous charge capacity loss suppression rate of Example A9-1 and Comparative Examples A9-1 to A9-2 using positive electrodes 1, 3 and 4.

As shown in Tables A7 and A8, when Compounds A1 and A4 are contained in a nonaqueous electrolytic solution of a nonaqueous electrolytic solution secondary battery containing a positive electrode active material of a specific composition (Examples A7-1 and A7-2), the continuous charge capacity loss rate is improved compared to cases in which Compounds A1 and A4 are not contained (Comparative Example A7-1) . On the other hand, electrolytic solutions containing Compound A10 or A11 (Comparative Examples A8-2 and A8-3) used in the conventional technique (Patent Document 2) are inferior to those containing Compounds A1 and A4 (Examples A8-1 and A8-2), as the continuous charge capacity loss rate is larger.

The continuous charge capacity loss rate is more improved when an additive used in the conventional technique (Patent Document 1) is used in combination as a secondary salt than when this is used in combination as a main salt.

As for LiFSI, the continuous charge capacity loss rate tends to increase when contained singly, regardless of the type of positive electrode (Comparative Examples A7-2 and A7-7). When a positive electrode 3 is used, even when compound A1 is contained beside LiFSI, the continuous charge capacity loss rate is larger than when each is contained singly (Comparative Example A7-8) .

However, it is found that, in the case of using the positive electrode 1, when Compound A1 is contained in addition to LiFSI, the continuous charge capacity loss rate is smaller than when LiFSI is contained singly (Example A7-4) . In other words, a synergistic effect of combining the positive electrode 1 with LiFSI as a secondary salt and Compound A1 can be confirmed.

When the positive electrode 1 is used and Compound A1 is contained in addition to LiBOB or FSO₃Li, a continuous charge capacity loss rate suppression effect is even greater than when only compound A1 is contained (Examples A7-2 and A7-3), and a synergistic effect of combing the positive electrode 1 with LiBOB or FSO₃Li as a secondary salt and Compound A1 can be confirmed.

As shown in Table A9, the continuous charge capacity loss suppression effect of Compound A4 is exhibited in a nonaqueous electrolytic solution secondary battery (Example A9-1) using the positive electrode 1 containing a positive electrode active material with a specific composition. On the other hand, in nonaqueous electrolytic solution secondary batteries (Comparative Examples A9-1 and A9-2) using the positive electrodes 3 and 4 containing positive electrode active materials that do not have a specific composition, no continuous charge capacity loss suppression effect of Compound A4 was observed.

### [Table 7]

**Table A7**

| | Positive electrode | Electrolytic solution composition | Continuous charge capacity loss rate (relative value) |
|---|---|---|---|
| Examples A7-1 | positive electrode 1 | A1-1 | 85 |
| Examples A7-2 | positive electrode 1 | A8-1 | 81 |
| Examples A7-3 | positive electrode 1 | A1-12 | 92 |
| Examples A7-4 | positive electrode 1 | A1-14 | 57 |
| Examples A7-5 | positive electrode 1 | A1-16 | 84 |
| Comparative Example A7-1 | positive electrode 1 | A31-1 | 100 |
| Comparative Example A7-2 | positive electrode 1 | A22-1 | 99 |
| Comparative Example A7-3 | positive electrode 1 | A1-13 | 99 |
| Comparative Example A7-4 | positive electrode 3 | A31-1 | 100 |
| Comparative Example A7-5 | positive electrode 3 | A1-1 | 104 |
| Comparative Example A7-6 | positive electrode 3 | A4-1 | 98 |
| Comparative Example A7-7 | positive electrode 3 | A22-1 | 101 |
| Comparative Example A7-8 | positive electrode 3 | A1-12 | 207 |

### [Table 8]

**Table A8**

| | Positive electrode | Electrolytic solution composition | Continuous charge capacity loss rate |
|---|---|---|---|
| Examples A8-1 | positive electrode 1 | A1-1 | 9.3 |
| Examples A8-2 | positive electrode 1 | A4-1 | 7.6 |
| Comparative Example A8-1 | positive electrode 1 | A31-1 | 97 |
| Comparative Example A8-2 | positive electrode 1 | A10-1 | 10.2 |
| Comparative Example A8-3 | positive electrode 1 | A11-1 | 9.7 |

### [Table 9]

**Table A9**

| | Positive electrode | Electrolytic solution composition | Continuous charge capacity loss suppression rate |
|---|---|---|---|
| Examples A9-1 | positive electrode 1 | A4-1 | 21 |
| Comparative Example A9-1 | positive electrode 3 | A4-1 | 2 |
| Comparative Example A9-2 | positive electrode 4 | A4-1 | -3 |

### [Experiment A2]

### [Evaluation of Nonaqueous Electrolytic Solution Secondary Battery]

### · Evaluation of Initial Charge/discharge, and Self-discharge and Increase in Internal Resistance

The "self-discharge rate" and "internal resistance increase rate" were defined as in Experiment A, except that the nonaqueous electrolytic solution secondary battery was initially charged and discharged as in Experiment A, and then left at 85°C for 24 hours.

The smaller the self-discharge rate and internal resistance increase rate, the more preferable.

Table A10 shows the self-discharge rate (relative value with Comparative Example A10-1 as 100) for Examples A10-1 to A10-4 and Comparative Examples A10-1 to A10-2. As shown in Table A10, when a specific amount of Compound A4 is contained in a nonaqueous electrolytic solution of a nonaqueous electrolytic solution secondary battery containing a positive electrode active material of a specific composition (Examples 10-1 to A10-3), the self-discharge rate is smaller and improved compared to a case in which Compound A4 is not contained (Comparative Example A10-1). A nonaqueous secondary battery containing a nonaqueous electrolytic solution containing lithium bis(oxalate)borate in addition to the electrolytic solution of Example A10-1 (Example A10-4) exhibits an even higher level of suppression of self-discharge than when Compound A4 is not contained (Comparative Example A10-2) .

### [Table 10]

**Table A10**

| | Positive electrode | Electrolytic solution composition | Self-discharge rate (relative value) |
|---|---|---|---|
| Examples A10-1 | positive electrode 1 | A4-2 | 80 |
| Examples A10-2 | positive electrode 1 | A4-4 | 72 |
| Examples A10-3 | positive electrode 1 | A4-5 | 73 |
| Examples A10-4 | positive electrode 1 | A4-12 | 70 |
| Comparative Example A10-1 | positive electrode 1 | A31-1 | 100 |
| Comparative Example A10-2 | positive electrode 1 | A24-1 | 90 |

Table A11 shows the internal resistance increase rate for Examples A11-1 to A11-4 and Comparative Examples A11-1 to A11-3. As shown in Table A11, when a nonaqueous electrolytic solution of the nonaqueous electrolytic solution secondary battery of the present invention containing a positive electrode active material of a specific composition contains a specific amount of Compound A4 (Examples A11-1 to A11-2), the internal resistance increase rate is smaller and improved compared to a case in which Compound A4 is not contained (Comparative Example A11-1). Nonaqueous secondary batteries (Examples A11-3 and A11-4) containing a nonaqueous electrolytic solution containing lithium difluorophosphate or lithium fluorosulfonate in addition to the electrolytic solution of Example A11-1 have an even higher level of suppressed internal resistance increase.

### [Table 11]

**Table A11**

| | Positive electrode | Electrolytic solution composition | Internal resistance increase rate (%) |
|---|---|---|---|
| Examples A11-1 | positive electrode 1 | A4-2 | 26 |
| Examples A11-2 | positive electrode 1 | A4-4 | 22 |
| Examples A11-3 | positive electrode 1 | A4-11 | 17 |
| Examples A11-4 | positive electrode 1 | A4-13 | 10 |
| Comparative Example A11-1 | positive electrode 1 | A31-1 | 32 |
| Comparative Example A11-2 | positive electrode 1 | A21-1 | 25 |
| Comparative Example A11-3 | positive electrode 1 | A21-3 | 14 |

### [Experiment B]

Specific aspects of the present invention will now be described in more detail by means of Examples, but the present invention is not limited by these Examples.

Compounds B1 to B3 and combination additives used in the present Examples are listed below.

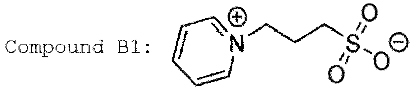

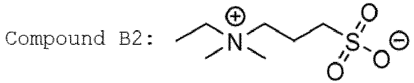

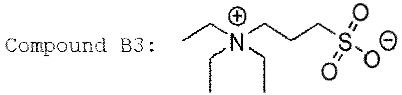

(Below are combination additives)
Lithium difluorophosphate (F₂PO₂Li)
Lithium Fluorosulfonate (FSO₃Li)
Lithium bisoxalate borate (LiBOB)
Lithium difluorobis(oxalate)phosphate (LiF₂OP)
Lithium bis(fluorosulfonyl)imide (LiFSI)
Vinylene Carbonate (VC)
Fluoroethylene Carbonate (FEC)
Lithium tetrafluoroborate (LiBF₄)
1,3-Dioxane (13DO)
Triethyl phosphonoacetate (EDPA)

### [Examples B1 to B3, Comparative Examples B1 to B3]

### [Manufacturing of Nonaqueous Electrolytic Solution Secondary Battery]

### < Preparation of Nonaqueous Electrolytic Solution >

A nonaqueous electrolytic solution was prepared by dissolving 1.2 mol/L (as the concentration in the nonaqueous electrolytic solution) of well-dried LiPF₆ in a mixture of ethylene carbonate, ethyl methyl carbonate, and dimethyl carbonate (volume ratio 3:4:3) under a dry argon atmosphere and further dissolving additives in the combinations listed in Table B1, with a nonaqueous electrolytic solution as the standard.

Using this nonaqueous electrolytic solution, a nonaqueous electrolytic solution secondary battery was manufactured by the following method, and the above-described evaluation was carried out.

### < Manufacturing of Positive Electrode >

94 parts by mass of Li_{1.00}Ni_{0.61}Mn_{0.19}Co_{0.20}O₂ (Ni/M molar ratio = 0.61) as a positive electrode active material, 3 parts by mass of acetylene black as a conductive material, and 3 parts by mass of polyvinylidene fluoride (PVdF) as a binding agent were mixed and slurried in *N*-methyl-2-pyrrolidone, and the slurry was uniformly applied to a 15 µm thick aluminum foil, dried, and roll-pressed to form a positive electrode (this positive electrode is sometimes referred to as a positive electrode 1). The electrode plate density of the positive electrode was 3.3 g/cm³.

### < Manufacturing of Negative Electrode >

To 49 parts by mass of graphite powder, 50 parts by mass of an aqueous dispersion of sodium carboxymethylcellulose (the concentration of sodium carboxymethylcellulose is 1% by mass) as a thickener, and 1 part by mass of aqueous dispersion of styrene-butadiene rubber (concentration of styrene-butadiene rubber 50% by mass) as a binder were added and mixed by a disperser to make a slurry. The resulting slurry was uniformly applied to a 10 um thick copper foil, dried, and roll pressed to make a negative electrode.

### < Production of Nonaqueous Electrolytic Solution Secondary Battery >

The above-described positive electrode, negative electrode, and polyolefin separator were layered in the order of negative electrode, separator, and positive electrode. The thus obtained battery elements were wrapped in aluminum laminate film, filled with the above-described nonaqueous electrolytic solution, and then vacuum-sealed to manufacture a sheet nonaqueous electrolytic solution secondary battery. Electrolytic solutions of the compositions listed in each table were used.

### [Evaluation of Nonaqueous Electrolytic Solution Secondary Battery]

The nonaqueous electrolytic solution secondary batteries manufactured in Examples were evaluated as follows.

### · Initial Charge/discharge

In a thermostat bath at 25°C, a sheet nonaqueous electrolytic solution secondary battery was charged at 0.05 C (The current value at which the rated capacity is discharged in 1 hour by the discharge capacity at the 1-hour rate is 1 C. The same applies hereafter.) with a constant current to 3.7 V, followed by a constant current-constant voltage charge at 0.2 C to 4.2 V, and then a constant current discharge at 0.2C to 2.5 V.

Furthermore, the nonaqueous electrolytic solution secondary battery was stabilized by storing the battery at 60°C for 24 hours after constant-current-constant-voltage charging at 0.2 C to 4.1 V. The battery was then discharged at a constant current to 2.5 V at 25°C, followed by a constant-current-constant-voltage charge at 0.2 C to a voltage of 4.2 V. A constant-current discharge was then carried out at 0.2 C to 2.5 V, and the initial capacity (A) was defined as the discharge capacity at this time.

Then, at 25°C, a constant-current-constant-voltage charge was performed at 0.2 C up to a voltage of 3.7 V. This was discharged at 0.05 C, 0.1 C, 0.25 C, 0.5 C, 0.75 C, and 1 C at -20°C, respectively, and the voltage at 10 seconds was measured. The internal resistance (R_{1A}) was determined from the current-voltage line. The relative value (R_{1A} / R_{1B} × 100) with respect to the internal resistance (R_{1B}) of a nonaqueous electrolytic solution secondary battery (Comparative Example 1) with no additive in a nonaqueous electrolytic solution was defined as the initial low temperature discharge characteristics (R₁').

Next, a constant-current-constant-voltage charge was performed at 0.2 C to a voltage of 4.2 V to complete the initial charge and discharge.

### · Evaluation of Self-Discharge, Capacity Maintenance Rate, and Low Temperature Discharge Characteristic Maintenance Rate

The nonaqueous electrolytic solution secondary battery after the initial charge-discharge described above was left at 85°C for 24 hours. The discharge capacity of the nonaqueous electrolytic solution secondary battery when the battery was discharged at a constant current up to 2.5 V at 0.2 C in a thermostat bath at 25°C was defined as the leftover capacity (B), and the ratio ((A - B) / A × 100) of the difference between the initial capacity (A) and the leftover capacity (B) was defined as the "self-discharge rate. Then, after constant-current-constant-voltage charging at 0.2 C up to a voltage of 4.2 V, the discharged capacity at constant-current discharge at 0.2 C up to 2.5 V was defined as the leftover recovery capacity (C). The ratio (C / A × 100) of the initial capacity (A) to the leftover recovery capacity (C) was defined as the "capacity maintenance rate".

Then, at 25°C, a constant-current-constant-voltage charge was performed at 0.2 C up to a voltage of 3.7 V. This was discharged at 0.05 C, 0.1 C, 0.25 C, 0.5 C, 0.75 C, and 1 C at -20°C, respectively, and the voltage at 10 seconds was measured. The internal resistance (R_{2A}) was obtained from this current-voltage line. The relative value (R_{2A} / R_{2B} × 100) with respect to the internal resistance (R_{2B}) of a nonaqueous electrolytic solution secondary battery (Comparative Example 1) with no additives in a nonaqueous electrolytic solution was defined as the initial low temperature discharge characteristics (R₂'). The value of the internal resistance was defined as the leftover low temperature discharge characteristics (R₂), and the rate of change between R₁ and R₂ [R₂ / R₁ × 100] was defined as the "low temperature discharge characteristic maintenance rate".

The smaller the self-discharge rate and low temperature discharge characteristic maintenance rate, the more preferable, and the larger the capacity maintenance rate, the more preferable.

Table B1 shows the low temperature discharge characteristic maintenance rate (relative value with Comparative Example B1-1 as 100). As is clear from Table B1, when the mass of the specific zwitterionic compound (Compound B1 or B2) of the present invention is equal to or less than the total mass of a specific salt additive, the zwitterionic compound (Compound B1 or B2) reduces the low temperature discharge characteristic maintenance rate and improves the performance as a battery. On the other hand, when the mass of the specific zwitterionic compound (Compound B1 or B2) of the present invention exceeds the total mass of a salt additive, no effect of the zwitterionic compound (Compound B1 or B2) in reducing the low temperature discharge characteristic maintenance rate was observed.

Addition of vinylene carbonate, fluoroethylene carbonate, lithium tetrafluoroborate, ethynylethylene carbonate, 1,3-dioxane, triethyl phosphonoacetate, and anhydrous amber acid used in conventional technique (Patent Document 1, 2 or 5) had no effect on reducing the low temperature discharge characteristic maintenance rate.

### [Table 12]

**Table B 1**

| | Additive 1 (mass %) | Additive 2 (mass %) | Low temperature discharge characteristic maintenance rate |
|---|---|---|---|
| Examples B1-1 | Lithium difluorophosphate (0.5) | Compound B1 (0.3) | 88 |
| Examples B1-2 | Lithium difluorophosphate (0.5) Fluorosulfonate (0.5) | Compound B1 (0.3) | 83 |
| Examples B1-3 | Lithium bis(oxalate)borate (0.5) | Compound B1 (0.3) | 89 |
| Examples B1-4 | Lithium bis(fluorosulfonyl)imide (0.5) | Compound B3 (0.3) | 95 |
| Examples B1-5 | Lithium bis(oxalate)borale (0.5) | Compound B3 (0.3) | 83 |
| | | | |
| Comparative Example B1-1 | - | - | 100 |
| Comparative Example Bl-2 | - | Compound B2 (0.3) | 93 |
| Comparative Example B1-3 | - | Compound B1 (0.3) | 96 |
| Comparative Example B1-4 | - | Compound B1 (1) | 93 |
| Comparative Example B1-5 | - | Compound B1 (1.5) | 96 |
| Comparative Example B1-6 | Lithium difluorophosphate (0.5) | - | 95 |
| Comparative Example B1-7 | Lithium difluorophosphate (0.5) | Compound B1 (1) | 98 |
| Comparative Example B1-8 | Difluorophosphate (0.5) Lithium fluorosulfonate (0.5) | Compound B1 (1.5) | 100 |
| Comparative Example B1-9 | Vinylene carbonate (0.5) | - | 95 |
| Comparative Example B1-10 | Vinylene carbonate (0.5) | Compound B1 (0.3) | 97 |
| Comparative Example B1-11 | Vinylene carbonate (0.5) | Compound B1 (1) | 95 |
| Comparative Example B1-12 | Fluoroethylene carbonate (0.5) | - | 96 |
| Comparative Example B1-13 | Fluoroethylene carbonate (0.5) | Compound B1 (0.3) | 97 |
| Comparative Example B1-14 | Fluoroethylene carbonate (0.5) | Compound B1 (1) | 93 |
| Comparative Example B1-15 | Lithium tctrafluoroboratc (0.5) | - | 100 |
| Comparative Example BL-16 | Lithium tetrafluoroborate (0.5) | Compound B1 (0.3) | 103 |
| Comparative Example B1-17 | Lithium tetrafluoroborate (0.5) | Compound B1 (1) | 101 |
| Comparative Example B1-18 | Lithium bis(fluorosulfonyl)imide (7.4) | Compound B2 (0.3) | 99 |
| Comparative Example 81-19 | 1,3-Dioxane (0.5) | Compound B2 (0.3) | 97 |
| Comparative Example B1-20 | Triethyl phosphonoacetate (0.5) | Compound B2 (0.3) | 100 |

Table B2 shows the self-discharge rate (relative value with Comparative Example B2-1 as 100). As is clear from Table B2, when the mass of a specific zwitterionic compound (Compound B1 or B2) is equal to or less than the mass of the total amount of a lithium salt additive, the zwitterionic compound (Compound B1 or B2) reduces the self-discharge rate and improves the performance as a battery. On the other hand, when the mass of a specific zwitterionic compound (Compound B1 or B2) exceeds the total mass of a salt additive, no effect of the zwitterionic compound (Compound B1 or B2) in reducing the self-discharge rate was observed.

Addition of vinylene carbonate, fluoroethylene carbonate, and lithium tetrafluoroborate used in conventional technique (Patent Document 2 or 5) had no effect in reducing the self-discharge rate.

### [Table 13]

**Table B2**

| | Additive 1 (mass %) | Additive 2 (mass %) | Self-discharge rate (relative value) |
|---|---|---|---|
| Examples B2-1 | Lithium bis(oxalate)borate (0.5) | Compound B1 (0.3) | 68 |
| Examples B2-2 | Lithium fluorosulfonate (0.5) | Compound B2 (0.3) | 74 |
| Comparative Example B2-1 | - | - | 100 |
| Comparative Example B2-2 | - | Compound B1 (0.3) | 84 |
| Comparative Example B2-3 | - | Compound B2 (0.3) | 79 |
| Comparative Example B2-4 | Lithium fluorosulfonate (0.5) | - | 97 |
| Comparative Example B2-5 | Lithium fluorosulfonate (0.5) | Compound B2 (1) | 105 |
| Comparative Example B2-6 | Lithium bis(oxalate)borate (0.5) | - | 89 |
| Comparative Example B2-7 | Lithium bis(oxalate)borate (0.5) | Compound B1 (1) | 89 |
| Comparative Example B2-8 | Fluoroethylene carbonate (0.5) | - | 84 |
| Comparative Example B2-9 | Fluoroethylene carbonate (0.5) | Compound B1 (0.3) | 105 |
| Comparative Example B2-10 | Lithium tetrafluoroborate (0.5) | - | 116 |
| Comparative Example B2-11 | Lithium tetrafluoroborate (0.5) | Compound B1 (0.3) | 139 |
| Comparative Example B2-12 | Lithium tetrafluoroborate (0.5) | Compound B1 (1) | 118 |

Table B3 shows the capacity maintenance rate (relative value with Comparative Example B3-1 as 100). As is clear from Table B3, when the mass of a specific zwitterionic compound (Compound B1) is equal to or less than the mass of the total salt additive, the zwitterionic compound (Compound B1) improves the capacity maintenance rate and the battery life. On the other hand, when the mass of a specific zwitterionic compound (Compound B1) exceeds the total mass of a salt additive, no improvement in the capacity maintenance rate due to the zwitterionic compound (Compound B1) was observed.

Addition of fluoroethylene carbonate and lithium tetrafluoroborate used in conventional technique (Patent Document 2 or 5) did not improve the capacity maintenance rate.

### [Table 15]

**Table B3**

| | Additive 1 | Additive 2 | Capacity maintenance rate |
|---|---|---|---|
| Examples β3-1 | Lithium bis(oxalate)borate (0.5) | Compound B 1 (0.3) | 100.8 |
| Examples B3-2 | Lithium difluorobis(oxalate) phosphate (0.5) | Compound B1 (0.3) | 100.4 |
| Comparative Example B3-1 | - | - | 100.0 |
| Comparative Example B3-2 | - | Compound B1 (0.3) | 100.3 |
| Comparative Example B3-3 | - | Compound B1 (1) | 100.1 |
| Comparative Example B3-4 | Lithium bis(oxalate)borate (0.5) | - | 100.3 |
| Comparative Example B3-5 | Lithium bis(oxalate)borate (0.5) | Compound B1 (1) | 99.9 |
| Comparative Example B3-6 | | - | 100.1 |
| Comparative Example B3-7 | Lithium difluorobis(oxalate) phosphate (0.5) | Compound B1 (1) | 99.9 |
| Comparative Example B3-8 | Fluoroethylene carbonate (0.5) | - | 100.3 |
| Comparative Example B3-9 | Fluoroethylene carbonate (0.5) | Compound B1 (0.3) | 99.7 |
| Comparative Example B3-10 | Fluoroethylene carbonate (0.5) | Compound B1 (1) | 100.1 |
| Comparative Example B3-11 | Lithium tetrafluoroborate (0.5) | - | 99.2 |
| Comparative Example B3-12 | Lithium tetrafluoroborate (0.5) | Compound B1 (0.3) | 98.6 |
| Comparative Example B3-13 | Lithium tetrafluoroborate (0.5) | Compound B1 (1) | 98.8 |

## Claims

1. A nonaqueous electrolytic solution secondary battery comprising: a positive electrode containing a positive electrode active material capable of absorbing and releasing a metal ion; a negative electrode containing a negative electrode active material capable of absorbing and releasing a metal ion; and a nonaqueous electrolytic solution, wherein
the nonaqueous electrolytic solution contains a compound represented by the following formula (I) and/or (II), and wherein
the positive electrode active material contains a lithium transition metal compound represented by the following composition formula (IV).
Li₁₊ₓMO₂ ··· (IV)
(In the above-described composition formula (IV), x is from - 0.1 to 0.5, M is a plurality of elements including at least Ni, and the Ni/M molar ratio is from 0.40 to 1.0) 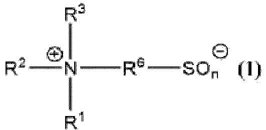 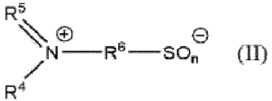 (In formulas (I) and (II), R¹ to R⁵ are organic groups having from 1 to 18 carbon atoms that are independent or bonded to each other, R⁶ is a hydrocarbon group having from 1 to 4 carbon atoms, and n is an integer from 2 to 4)

2. The nonaqueous electrolytic solution secondary battery according to claim 1, further containing at least one compound selected from the group consisting of a fluorophosphate containing a P=O bond, a salt having an FSO₂ skeleton, an oxalate, and an organic compound containing an S=O bond, and the content of the compounds is from 0.001 to 5% by mass.

3. The nonaqueous electrolytic solution secondary battery according to claim 1 or 2, wherein the organic compound containing an S=O bond is a sulfonate ester or a sulfate ester.

4. The nonaqueous electrolytic solution secondary battery according to any one of claims 1 to 3, wherein R¹ to R³ in the formula (I) are hydrocarbon groups having from 1 to 15 carbon atoms that are independent or bonded to each other.

5. The nonaqueous electrolytic solution secondary battery according to any one of claims 1 to 4, wherein R¹ to R³ in the formula (I) are a methyl group or an ethyl group.

6. The nonaqueous electrolytic solution secondary battery according to any one of claims 1 to 5, wherein the positive electrode active material contains 10 µmol/g or more of carbonate.

7. A nonaqueous electrolytic solution containing:
a compound (X) represented by the formulas (I) and/or (II); and
at least one compound (Y) selected from the group consisting of a fluorophosphate containing a P=O bond, a salt having an FSO₂ skeleton, an oxalate, and an organic compound containing an S=O bond, wherein the content of the compound(s) (Y) is from 0.001 to 5% by mass, and wherein the content (mass) of the compound (X) contained in the nonaqueous electrolytic solution is equal to or less than the content (mass) of the compound(s) (Y). 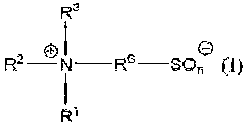 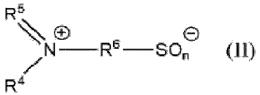 (In formulas (I) and (II), R¹ to R⁵ are organic groups having 1 to 18 carbon atoms that are independent or bonded to each other, R⁶ is a hydrocarbon group having from 1 to 4 carbon atoms, and n is an integer from 2 to 4.)

8. The nonaqueous electrolytic solution according to claim 7, wherein the fluorophosphate salt containing a P=O bond, the salt having an FSO₂ skeleton, and the oxalate salt are a lithium fluorophosphate salt containing a P=O bond, a FSO₂-based lithium salt, and an oxalate-based lithium salt, respectively.

9. The nonaqueous electrolytic solution according to claim 7 or 8, wherein the nonaqueous electrolytic solution contains an electrolyte (C) other than the compound (Y), and the content ratio (C) / (X) of the compound (X) to the content of the electrolyte (C) is from 2 to 10,000.

10. A nonaqueous electrolytic solution secondary battery comprising: a positive electrode containing a positive electrode active material capable of absorbing and releasing a metal ion; a negative electrode containing a negative electrode active material capable of absorbing and releasing a metal ion; and the nonaqueous electrolytic solution according to any one of claims 7 to 9.

11. The nonaqueous electrolytic solution secondary battery according to claim 10, wherein the nonaqueous electrolytic solution secondary battery contains a lithium transition metal compound represented by the following composition formula (IV)
Li₁₊ₓMO₂ ··· (IV)
(In the above composition formula (IV), x is from -0.1 to 0.5, M is a plurality of elements including at least Ni, and the Ni/M molar ratio is from 0.40 to 1.0).

12. The nonaqueous electrolytic solution secondary battery according to claim 9 or 10, wherein M in the formula (IV) contains Mn.
